(19) Europäisches Patentamt
European Patent Office
Office européen des brevets

(11) EP 0 814 092 B1

(12) **EUROPEAN PATENT SPECIFICATION**

(45) Date of publication and mention of the grant of the patent:
**07.11.2001 Bulletin 2001/45**

(21) Application number: **96904265.4**

(22) Date of filing: **28.02.1996**

(51) Int Cl.⁷: **C08B 31/02**, C08B 31/04, C08L 3/06

(86) International application number:
**PCT/JP96/00459**

(87) International publication number:
**WO 96/27616 (12.09.1996 Gazette 1996/41)**

(54) **ESTERIFIED AND POLYESTER-GRAFTED STARCH AND ALLOY THEREOF**
VERESTERTE STÄRKE MIT PFROPFPOLYESTER UND IHR LEGIERUNG
AMIDON ESTERIFIE A POLYESTER GREFFE, ET SON ALLIAGE

(84) Designated Contracting States:
**BE DE FR GB IT NL SE**

(30) Priority: **03.03.1995 JP 4449195**
**31.05.1995 JP 13387395**
**14.07.1995 JP 17903595**

(43) Date of publication of application:
**29.12.1997 Bulletin 1997/52**

(73) Proprietor: **JAPAN CORN STARCH CO., LTD.**
**Nagoya-shi, Aichi 460 (JP)**

(72) Inventors:
- **TANAKA, Hideyuki, Japan Corn Starch Co., Ltd. Hekinan-shi, Aichi 447 (JP)**
- **KAWAMATSU, Tetsuya, Japan Corn Starch Co., Ltd. Hekinan-shi, Aichi 447 (JP)**
- **UTSUE, Isamu, Japan Corn Starch Co., Ltd. Hekinan-shi, Aichi 447 (JP)**
- **OKUMURA, Yasuhito, Japan Corn Starch Co., Ltd. Hekinan-shi, Aichi 447 (JP)**
- **TANAKA, Hiroshi, Japan Corn Starch Co., Ltd. Hekinan-shi, Aichi 447 (JP)**

(74) Representative: **Tiedtke, Harro, Dipl.-Ing. et al**
**Patentanwaltsbüro**
**Tiedtke-Bühling-Kinne & Partner**
**Bavariaring 4**
**80336 München (DE)**

(56) References cited:
**WO-A-94/07953**
**WO-A-95/25750**
**JP-A- 5 125 101**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

[Background of the Invention]

The present invention relates to a new esterified, polyester-grafted starch or alloy thereof, a process for synthesis thereof, and a biodegradable thermoplastic resin composition made entirely or partly from said esterified, polyester-grafted starch or alloy thereof.

<Description of terms and abbreviations>

The terms and abbreviations used in this specification are defined as follows.

(1) Alloy : A uniform blend of different polymers. In the present invention, this term is used to denote a mixture in the molecular state of an esterified, polyester-grafted starch and a polyester which are formed simultaneously or sequentially in the same reaction system.
(2) Ester blocking ratio: The ratio of the terminal hydroxyl groups of grafted polyester and independent polyester and the hydroxyl groups connected directly to starch which are blocked by esterification. The ester blocking ratio will be 100% if all the hydroxyl groups are blocked.
(3) DS value : The degree of esterification and etherification of the derivative, or the average number of substituted hydroxyl groups per glucose residue. The DS value will be 3 if all the hydroxyl groups are blocked.
(4) Degree of molecular substitution by grafting (MS) : This is defined by the formula below.

$$MS = (A/B) / (C/D)$$

Where

A is the weight of lactone for grafting,
B is the molecular weight of lactone,
C is the weight of starch charged, and
D is the molecular weight of starch.

(5) PCL : polycaprolactone

PLA : polylactic acid
PHB/V : polyhydroxybutyrate/valeate

(6) phr : The amount (parts by weight) of adjuvant added to 100 parts by weight of base polymer.

Active development works are going on for practical biodegradable resins and resin compositions, which are exemplified below.

1) Polyester-based plastics, such as PCL, PLA, and PHB/V.
2) Cellulose derivatives.
3) A blend of PVA or ethylene-vinyl acetate copolymer with starch.
4) Highly esterified starch (especially, starch esterified with acetic acid to a high degree of substitution).

Of these examples, the last one is attracting attention because of its low production cost. There are some known references regarding such biodegradable resins, although they do not directly affect the novelty of the present invention. USP 5367067, PCT/US92/02003, and Japanese Patent Application Publicized No. H05-508185 (1993). A process for synthesis of starch ester is reported in "Die Starke" P-73, 1972, by A. M. Mark and C. L. Mehltretter. Grafted starch-based biodegradable plastics are disclosed in Japanese Patent Laid-open No. H05-125101 (1993) (filed by Asahi Chemical Industry Co., Ltd.) and "A New Biodegradable Plastic Made from Starch Graft Poly(methyl acrylate) Copolymer" (Journal of Applied Polymer Science, vol. 22, 459-465, 1978).
The known technology for synthesis of esterified starch and grafted starch has not yet reached the level of practical use. As far as the present inventors know, none of the biodegradable plastics based on starch derivatives have been put to practical use and put on the market. A probable reason for this is as follows.
According to the present inventors' investigation, it was found that moldings (molded items, film, sheet, etc.)

produced from highly esterified starch alone or polyester-grafted starch alone are poor in physical and chemical properties as shown below.

(1) Physical properties:

1) Moldings are brittle and lack toughness for practical use. For moldings to have sufficient toughness and flexibility, it is necessary to incorporate a large amount of plasticizer. This poses a problem associated with decrease in mechanical strength and deterioration with time.
2) Moldings are so susceptible to moisture and water that they cannot be used in application areas where water resistance, moisture resistance, water repellence, and water vapor permeability are required.

(2) Polyester grafting reaction:

1) The reaction temperature is so high that starch undergoes thermal degradation.
2) The reaction product is so hydrophilic that it cannot be practically recovered under water.
3) The reaction is such that the polyester graft side chains have a low degree of polymerization.

Blending of a modified starch with a synthetic thermoplastic resin has been attempted. However, the resulting blend is poor in mechanical properties and transparency if the modified starch is conventional one which is formed by graft polymerization alone or esterification (at a high degree of substitution with a low molecular weight) by an acid anhydride or acid halide.
These results are due to poor compatibility with resin. It is believed that resin compatibility depends on the distribution of substituent groups on the starch molecule, the degree of modification of starch, and the molecular weight of starch. There has been resin or starch based resin compound that is compatible with the existing synthetic resin.

[Detailed Description of the Invention]

The present invention was completed in view of the foregoing. It is an object of the present invention to provide a esterified, polyester-grafted starch or alloy thereof, a process for synthesis thereof, and a biodegradable thermoplastic resin composition derived therefrom, said esterified, polyester-grafted starch or alloy thereof being capable of imparting practical flexibility and toughness to moldings with no or only a little plasticizer.
In order to address the above-mentioned problems, the present inventors devoted themselves to the research and development on starch-based biodegradable resins. As the result, they conceived an esterified, polyester-grafted starch or alloy thereof, a process for synthesis thereof, and a biodegradable thermoplastic resin composition derived therefrom, as explained in the following.
A.

(1) The first and second claims of the present invention cover an esterified, polyester-grafted starch, which is a starch modified by both esterification and polyester grafting. The esterification involves one or more saturated or unsaturated aliphatic acids or aromatic carboxylic acids having 2 to 18 carbon atoms. The polyester is one which results from the ring-opening polymerization of one or more 4- to 12-membered lactones, with the terminal hydroxyl groups being almost completely blocked by esterification.
(2) The third to ninth claims of the present invention cover a process for synthesis of the esterified, polyester-grafted starch defined above in the first and second claims. The process consists of reacting starch with a vinyl ester or an acid anhydride or an acid chloride (as an esterifying agent) and a lactone (as a grafting agent) in a nonaqueous organic solvent with the aid of an esterifying/grafting catalyst, thereby performing the esterifying and grafting reactions simultaneously or sequentially.
(3) The tenth to thirteenth claims of the present invention cover a biodegradable thermoplastic resin composition which comprises a base polymer and an optional adjuvant, said base polymer being composed entirely or partly of the esterified, polyester-grafted starch defined in Claim 1 or 2, said optionally adjuvant being a biodegradable plasticizer and/or filler.

The present invention above-mentioned provides an esterified, grafted starch, a process for synthesis thereof, and a thermoplastic resin composition composed of said modified starch. As demonstrated in the following examples,

the resin composition yields moldings having good impact resistance and flexibility for practical use in both dry and wet states even though it is incorporated with no or only a little plasticizer.

(1) The esterified, polyester-grafted starch and the thermoplastic resin composition yield moldings which have the following properties.

1) Elongation greater than 10% in elastic limit.
2) Improved water vapor transmission.
3) Good flexibility which makes it possible to produce film without plasticizer or with only a little plasticizer.
4) Good retention of plasticizer.
5) Ability to accept a large amount (up to 50%) of inexpensive mineral filler (such as talk and calcium carbonate), without adverse effect on moldability.
6) Low flexural modulus and good flexibility (in the case of injection molding).

In addition to the above-mentioned properties, the moldings are still biodegradable.

It is believed that the above-mentioned effects arise from increased molecular weight, adequate crystallinity, polarity distribution, internal plasticizing, etc. The increased molecular weight is due to the acyl group (ester) introduced through the alcoholic hydroxyl groups of starch and the grafted polylactone having almost completely blocked terminal hydroxyl groups. Another reason is the fact that the alcoholic hydroxyl groups of starch are blocked and the terminal hydroxyl groups of the grafted polylactone are almost completely blocked.

(2) The present invention provides a process for synthesis of the esterified, polyester-grafted starch. This process produces the following effects which are not expected from the conventional process for synthesis of highly esterified starch and polyester-grafted starch.

Polyester grafting (ring-opening polymerization) at low temperatures. This protects starch from thermal decomposition which lowers the molecular weight of starch. The process of the present invention employs a catalyst which is effective for both esterifying and grafting. This catalyst previously activates (or anionizes) the alcoholic hydroxyl groups of starch as shown below, so that the lactone graft-polymerization and the esterification take place simultaneously in the same system.

Starch- $O^- M^+$ ($M^+$ = metal ion)

This reaction prevents the formation of polyester homopolymer and produces the graft side chains on starch.

The esterifying reaction makes it possible to block the terminal hydroxyl groups of grafted polylactone while suspending the ring-opening polymerization. The result is that the reaction product is hydrophobic even though the grafted side chains have a low degree of polymerization. The hydrophobic product is easy to handle and recover in water.

According to the process of the present invention, it is possible to produce easily a variety of esterified, polyester-grafted starches varying in the degree of polymerization of side chains, by using a non-toxic, inexpensive catalyst.

B.

(1) The 14th to 16th claims of the present invention cover an esterified, polyester-grafted starch-polymer alloy, which is a uniform mixture (at the molecular level) of a modified starch and an independent polyester. The modified starch is a polyester-grafted starch in which the starch molecule has polyester graft side chains, with terminals entirely or partly ester-blocked and ungrafted hydroxyl groups on the starch molecule being entirely or partly blocked with ester groups. The independent polyester is composed of the same unit as the polyester graft side chains.

(2) The 17th to 22nd claims of the present invention cover a process for synthesis of an esterified, polyester-grafted starch-polymer alloy. The process consists of dissolving starch, together with an esterifying/grafting catalyst, in a nonaqueous organic solvent by heating, reacting the starch with lactone (including dimer and trimer) as a grafting agent, adding a catalyst for the ring-opening polymerization of lactone at the intermediate stage of reaction, thereby carrying out simultaneously the reaction to graft the polymer of lactone to the starch and the reaction to form the independent polyester, and subsequently adding an esterifying agent, thereby blocking simultaneously all or part of the terminal hydroxyl groups of the polyester graft chain, the terminal hydroxyl groups of the molecular miscible polymer, and the hydroxyl groups connected directly to the starch.

(3) The 23rd to 34th claims of the present invention cover a biodegradable thermoplastic resin composition, which base polymer is composed entirely or partly of the esterified, polyester-grafted starch-polymer alloy specified in (1) above.

The present invention provides an esterified, polyester-grafted starch-polymer alloy and a thermoplastic resin composition composed of said modified starch. As demonstrated in the following examples, the resin composition yields moldings having good impact resistance and flexibility for practical use in both dry and wet states even though it is incorporated with no or only a little plasticizer.

(1) The alloy and the resin composition thereof yield moldings which have the following characteristic properties.

1) Elongation greater than 10% (within elastic limit).
2) Improved water vapor transmission.
3) Good flexibility (in the form of film) which is attained with no or only a little plasticizer. (This is not true for the conventional starch-based resin or blend.)
4) Greatly improved retention of plasticizer.
5) Capability to accept a large amount (up to 50%) of mineral filler without adverse effect on moldability.
6) Capability to yield injection molded items having a low flexural modulus and good flexibility.

In addition to the above-mentioned properties, the moldings are still biodegradable.

It is believed that the above-mentioned effects arise from increased molecular weight, adequate crystallinity, polarity distribution, internal plasticizing, etc. together with existing the acyl group (ester) introduced through the alcoholic hydroxyl groups of starch and also together with existing grafted polylactone (having entirely or partly blocked its terminal hydroxyl groups) and also together with existing independent polyester which has entirely or partly blocked its terminal hydroxyl groups and is mixed (or dispersed) at molecular level. Another reason is the fact that the alcoholic hydroxyl groups of starch are blocked and the terminal hydroxyl groups of the grafted polylactone are almost completely blocked.

(2) The present invention provides a process for synthesis of the esterified, polyester-grafted starch-polymer alloy. This process produces the following effects which are not expected from the conventional process for synthesis of highly esterified starch and polyester-grafted starch or the conventional process for reaction to form the independent polyester.

1) Polyester grafting and polymerization for the independent polymer (ring-opening polymerization) at low temperatures under reduced pressure. Especially, the simultaneous grafting and polymerization under reduced pressure protects starch from thermal decomposition which lowers the molecular weight of starch. The reaction in this manner permits the independent polymer to be uniformly dispersed at the molecular level and readily gives the graft polymer (graft chains) having a high molecular weight.
2) The process of the present invention employs a catalyst which is effective for both esterifying and grafting. This catalyst previously activates the alcoholic hydroxyl groups of starch as shown below, so that the lactone graft-polymerization and the esterification take place simultaneously in the same system.

Starch- $O^-$ $M^+$ ($M^+$ = metal ion)

This reaction ensures the grafting onto starch. In addition, the esterifying reaction suspends the ring-opening polymerization and, at the same time, blocks the terminal hydroxyl groups of the grafted polylactone and the independent polyester (polylactone). Consequently, the resulting product is hydrophobic despite its low degree of polymerization, and hence it can be readily handled and recovered under water. This means that it is possible to control, by using an inexpensive catalyst, the synthesis (production) of the esterified, polyester-grafted starch-polymer alloy in which the polymer moiety varies in the degree of polymerization.

[Brief Description of the Drawings]

Fig. 1 is a flow diagram for preparation of the esterified, polyester-grafted starch in Example 1-1.
Fig. 2 is a flow diagram for preparation of the esterified, polyester-grafted starch in Example 1-2.
Fig. 3 is a flow diagram for preparation of the esterified, polyester-grafted starch in Example 1-3.
Fig. 4 is a flow diagram for preparation of the esterified, polyester-grafted starch in Example 1-4.
Fig. 5 is a flow diagram for preparation of the esterified starch in Comparative Example 1.
Fig. 6 is a flow diagram for preparation of the grafted starch in Comparative Example 2.
Fig. 7 is a flow diagram for preparation of the esterified, polyester-grafted starch-polymer alloy in Example 2-1.
Fig. 8 is a flow diagram for preparation of the esterified, polyester-grafted starch-polymer alloy in Example 2-2.
Fig. 9 is a flow diagram for preparation of the esterified, polyester-grafted starch-polymer alloy in Example 2-3.

[Description of the Preferred Embodiments]

In the following description, "%" used in the formulation means "wt%" unless otherwise indicated.

<I. Esterified, polyester-grafted starch>

(A) The esterified, polyester-grafted starch in the present invention is basically a starch which is both esterified and polyester-grafted. The esterification involves one or more saturated or unsaturated aliphatic acids or aromatic carboxylic acids having 2 to 18 carbon atoms and the polyester is one which is formed from one or more 4- to 12-membered lactones by ring-opening polymerization, with the terminal hydroxyl groups being almost completely blocked by esterification.

The esterified, polyester-grafted starch is represented by the structural formula 1 shown below.

[structural formula 1]

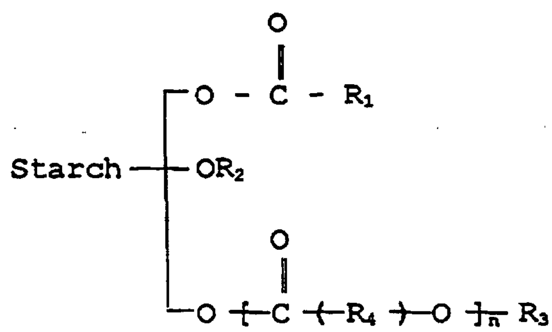

Where, Starch is the residue of starch molecule (including low-modified starch),

$R_1$ is any of alkyl groups, alkenyl groups, and aryl groups having 1 to 17 carbon atoms (preferably 1 to 7 carbon atoms),
$R_2$ is hydrogen or an acyl group having 2 to 18 carbon atoms,
$R_3$ is hydrogen or an acyl group having 2 to 18 carbon atoms, and
$R_4$ is one or more than one kind of alkylene group or ethylidene group represented by $C_mH_{2m}$ (m = 1 to 11).

Incidentally, the acyl group mentioned above may contain an alkyl group such as methyl, ethyl, propyl, butyl, octyl, dodecyl, and stearyl etc. The alkenyl group mentioned above is exemplified by acryl, hexenyl, and octenyl etc. The aryl group mentioned above is exemplified by benzyl, p-toluyl, and xylyl etc. Preferred alkyl groups include methyl, ethyl, and propyl.

(1) According to the present invention, the degree of substitution (DS) by esterification should be 0.1 to 3.0 (preferably 0.5 to 3.0), and the degree of molecular substitution (MS) by grafting with polyester (polylactone) molecules should be 0.1 to 20 (preferably 0.2 to 10).

A value of DS smaller than 0.1 suggests little improvement in physical properties such as moisture absorption and moldability. The value of DS should be as close to 3.0 as possible, so that the resulting moldings have improved water resistance and other water-related properties. With a value of MS smaller than 0.1, the modified starch exhibits plasticity but does not yield moldings having improved physical properties as well as biodegradability. A value of MS greater than 20 suggests that the modified starch is impracticable because of its high production cost and long reaction time and its incapability to yield satisfactory moldings.

(B) The esterified, polyester-grafted starch mentioned above may be prepared by any process which is not specifically restricted.

According to the present invention, a preferred process comprises reacting starch with a vinyl ester or an acid anhydride or an acid chloride (as an esterifying agent) and a lactone (as a grafting agent) in a nonaqueous organic solvent with the aid of an esterifying/grafting catalyst, thereby performing the esterifying and grafting reactions simultaneously or sequentially.

Raw starch for the above-mentioned process includes the following.

- Corn starch, high-amylose corn starch, wheat starch, and other unmodified starches originating from terrestrial

stems.

- Potato starch, tapioca starch, and other unmodified starches originating from subterranean stems.
- Slightly modified starches prepared from the above-mentioned starches by esterification, etherification, oxidation, acid treatment, and dextrinizing.

These raw starches may be used alone or in combination with one another.

In the case where esterifying and grafting are carried out sequentially, the order is immaterial. It is possible to start the process with a commercial esterified starch or a commercial polyester-grafted (or lactone-grafted) starch. The former is ready for grafting with lactone and is also ready for esterifying with vinyl ester, acid anhydride, or acid chloride, and the latter is ready for esterifying with vinyl ester, acid anhydride, or acid chloride.

(B-1) Esterifying:

(2) The vinyl ester used for esterifying is one in which the ester group has 2 to 18 carbon atoms (preferably 2 to 7 carbon atoms). One or more vinyl esters may be used alone or in combination with one another. Any vinyl ester in which the ester group has more than 18 carbon atoms is high in yields of reagent utilization but poor in reaction efficiency. Any vinyl ester in which the ester group has 2 to 7 carbon atoms is desirable because of its high reaction efficiency (70% or above).

Typical examples of the vinyl esters are given blow. Of these examples, vinyl acetate and vinyl propionate are desirable because of their high reaction efficiency. (The parenthesized number indicates the number of carbon atoms in the ester group.)

- Vinyl esters of saturated aliphatic carboxylic acids, such as vinyl acetate (C2), vinyl propionate (C3), vinyl butanoate (C4), vinyl caproate (C6), vinyl caprylate (C8), vinyl laurate (C12), vinyl palmitate (C16), and vinyl stearate (C18).
- Vinyl esters of unsaturated aliphatic carboxylic acids, such as vinyl acrylate (C3), vinyl crotonate (C4), vinyl isocrotonate (C4), and vinyl oleate (C18).
- Vinyl esters of aromatic carboxylic acids, such as vinyl benzoate and vinyl p-methylbenzoate.

The acid anhydride and acid chloride used for esterifying are those of organic acids having 2 to 18 carbon atoms, preferably 2 to 8 carbon atoms. Their preferred examples include anhydrides and chlorides of acetic acid, propionic acid, and butyric acid.

(3) In one embodiment of the present invention, the nonaqueous organic solvent is a vinyl ester.

This embodiment obviates the necessity of solvent recovery in the purification step. Incidentally, this mode of reaction is not employed in the conventional esterification with a vinyl ester.

This embodiment offers the advantage that the resulting product does not decrease in molecular weight and the reaction efficiency of vinyl ester is high. On the other hand, this embodiment has the disadvantage that the vinyl ester has to be used in the form of liquid (or heated melt) and the reaction is slightly uneven.

The vinyl ester that can be used in this embodiment includes those exemplified above.

(4) In another embodiment of the present invention, the nonaqueous organic solvent is not a vinyl ester. In other words, the vinyl ester as the reaction agent is not used as the nonaqueous organic solvent.

The advantage of not using a vinyl ester as the nonaqueous organic solvent is that it is possible to readily control the reactant concentration and reaction rate regardless of the kind of the esterifying agent (or vinyl ester, acid anhydride, and acid chloride). Another advantage is that the reaction is more uniform than in the case where a vinyl ester is used as the nonaqueous organic solvent. However, there is a disadvantage that the solvent has to be recovered after separation from the vinyl ester, acid anhydride, or acid chloride.

The nonaqueous organic solvent in this case may be selected from the following examples.

- Polar solvents such as dimethyl sulfoxide (DMSO), dimethylformamide (DMF), and pyridine, which dissolve starch.
- Polar solvents such as ethyl acetate and acetone, which do not dissolve starch but dissolve or are miscible with the vinyl ester acid anhydride, acid chloride, the lactones and the esterified polyester-grafted starch (without reaction with vinyl ester, acid anhydride, and acid chloride). They may be used alone or in combination with one another.

Of these examples, DMSO, DMF, and pyridine are desirable from the standpoint of the efficiency and uniformity of their reaction.

(5) The esterifying catalyst may be selected from any of the following three groups.

<1> Hydroxides and/or mineral acid salts or organic acid salts, carbonates, and alkoxides of metals belonging to

alkali metals, alkaline earth metals, and amphoteric metals.

<2> Organic phase transfer catalysts.

<3> Amino compounds.

Of these groups, the first one is desirable from the standpoint of reaction efficiency and catalyst cost.

Examples of each group are given below.

<1> Alkali metal hydroxides such as sodium hydroxide, potassium hydroxide, and lithium hydroxide; alkali metal salts of organic acids such as sodium acetate, sodium propionate, and sodium p-toluenesulfonate; hydroxides of alkaline earth metals such as barium hydroxide and calcium hydroxide, alkaline earth metal salts of organic acids such as calcium acetate, calcium propionate, and barium p-toluenesulfonate; salts of mineral acids such as sodium phosphate, calcium phosphate, sodium bisulfite, sodium bicarbonate, and potassium sulfate; salts of acids of amphoteric metals or hydroxides of amphoteric metals such as sodium aluminate, potassium zincate, aluminum hydroxide, and zinc hydroxide; carbonates such as sodium carbonate and potassium bicarbonate; sodium alcoholates such as sodium methylate and sodium ethylate; trialkoxyaluminum compounds such as aluminum isopropylate and aluminum ethylate; and metal alkoxides including alkoxy-type aluminum chelate compounds such as aluminum ethyl acetoacetate diisopropylate.

<2> Amino compounds such as dimethylaminopyridine and diethylaminoacetic acid.

<3> Quaternary ammonium compounds such as N-trimethyl-N-propyl ammonium chloride and N-tetraethylammonium chloride.

(6) According to a preferred embodiment, the above-mentioned catalyst should be previously impregnated into starch so as to improve the reaction efficiency in the case where the reaction is carried out in a vinyl ester as the medium or the reaction is carried out in a nonaqueous solvent which does not dissolve starch.

There are several methods for impregnation as shown below.

A method consisting of dipping raw starch in an aqueous solution or solvent containing the catalyst.

A method consisting of mixing raw starch with an aqueous solution or solvent containing the catalyst using a mixing apparatus such as kneader.

A method consisting of pregelatinizing raw starch using a drum dryer or the like together with an aqueous solution or solvent containing the catalyst.

A method consisting of gelatinizing raw starch using a batch cooker or continuous cooker together with an aqueous solution or solvent containing the catalyst.

(7) The esterification may be carried out at any temperature which is not specifically restricted. The reaction temperature is usually 30-200°C, preferably 60-150°C for better efficiency.

The conventional reaction that employs an acid anhydride is carried out at 40°C or below so that starch will not decrease in molecular weight (due to hydrolysis). By contrast, the reaction that employs a vinyl ester can be carried out at higher temperatures because it gives no acid as the by-product. This leads to higher efficiency.

Vinyl ester as the esterifying agent should be used in amount of 1-20 moles, preferably 1-7 moles, per mole of raw starch.

The amount of the esterifying catalyst should be usually 1-30% of anhydrous starch.

(B-2) Grafting:

(1) The present invention employs one or more lactones (including dimer and trimer cyclic esters) as the grafting agent. They are selected from 4- to 12-membered lactones in the form of monomer or oligomer, whose examples include β-propiolactone (4), γ- and δ-valerolactones (6), δ- and ε-caprolactones (6, 7), disalicylide (8), trisalicylide (12), 1,4dioxan-2-on, glycolide, lactide, trimethylene carbonate, and ethylene oxalate. Of these examples, 4- to 7-membered lactones, especially ε-caprolactone and lactide are desirable.

Grafting may be accomplished before or after the above-mentioned step of esterifying. Alternatively, grafting may be performed on a commercial esterified starch having an adequate degree of substitution.

(2) Polymerization may be carried by any method, for example, anionic polymerization, cationic polymerization, and coordination polymerization. The first method is desirable because it permits the grafting catalyst to be used in combination with the esterifying catalyst.

Polymerization should preferably be carried out in a nonaqueous organic solvent (polar solvent) that is used for esterifying.

Polymerization should be carried out under the conditions which are similar to those under which grafting is

performed on starch by ring-opening polymerization.

(3) In the case of anionic polymerization, the same catalyst as that used for esterifying mentioned above is also applied to grafting reaction. In the case of cationic polymerization, it is possible to use oxonium salt, protonic acid, and Lewis acid (with or without cocatalyst). The amount of the grafting catalyst should be 5 ppm to 50 wt% for the amount of the monomer.

Coordination polymerization may employ a reaction product of an organoaluminum or organozinc compound and water or acetylacetone or both (0.5-1.0 mole).

The reaction temperature should usually be lower than 200°C (preferably lower than 150°C). Reaction at 150°C or below under reduced pressure preferably below 0.272 bar (200 mmHg) is desirable so as to increase the degree of polymerization, to prevent starch from decreasing in molecular weight, and to shorten the reaction time. In order to ensure the grafting onto starch, it is desirable to previously treat starch with the catalyst under an alkaline condition, thereby forming a starch-metal complex, prior to the grafting reaction.

In the above process, an esterified starch with a high degree of substitution (DS: 2.0 or above) is preferably deesterified by the esterifying/grafting catalyst and water (as a deesterifying agent) and then reacted with the grafting reagent and subsequently with the esterifying reagent.

(C) The biodegradable thermoplastic resin composition pertaining to the present invention is composed of a base polymer and an optional adjuvant, said base polymer being composed entirely or partly of the esterified, polyester-grafted starch mentioned above, said optional adjuvant being a biodegradable plasticizer and/or filler and/or dispersing type agent. The amount of the esterified, polyester-grafted starch in the base polymer should be 5-100 wt%, preferably 25-100 wt%. The amount of the plasticizer is usually 0-90 phr, preferably 1-90 phr, more preferably less than 30 phr. The amount of the filler is usually 0-200 phr, preferably 0-150 phr. The amount of the dispersing type agent is usually 0.001-100 phr, preferably 0.01-50 phr.

As the adjuvant also an organic/inorganic filler may be used in an amount of 1 to 70 parts by weight for 100 parts by weight of the base polymer. In this case, as an additional adjuvant, a dispersing agent may be used in an amount of 0.001 to 100 parts by weight for 100 parts by weight of the base polymer.

The biodegradable thermoplastic resin composition defined above may preferably be composed of 100 parts by weight of the base polymer, 1 to 90 parts by weight of biodegradable plasticizer and 1 to 70 parts by weight of organic/inorganic filler. In this case, as an additional adjuvant, a dispersing agent may be contained in an amount of 0.001 to 100 parts by weight for 100 parts by weight of the base polymer.

In the biodegradable thermoplastic resin composition as defined above, the polymer to be incorporated into the esterifying, polyester-grafted starch-polymer alloy may be one or more members selected from the group consisting of esterified and/or etherified starch derivatives, olefin polymers, vinyl polymers, polyesters, polyamides, alkoxide polymers and cellulose derivatives.

(1) When the base polymer is composed of the esterified, polyester-grafted starch and an additional polymer, the latter should be one or more members selected from the group consisting of esterified and/or etherified starch derivatives, biodegradable polyester, cellulose derivatives, polyvinyl alcohol, and polyvinyl ester. Other examples of the additional polymer include polyamide, polycarbonate, polyurethane, vinyl monomer (excluding polyvinyl ester), polyolefin, polyalkylene oxide, biodegradable polyalkylene oxide, ethylene-vinyl acetate copolymer, ethylene-ethyl acrylate copolymer, ethylene-methyl acrylate copolymer, ABS resin, and styrene-acrylonitrile copolymer.

Specific examples of these polymers are given below.

- Biodegradable polyester includes polycaprolactone, polylactic acid, polyadipate, polyhydroxybutyrate, polyhydroxybutyrate-valeate, etc.
- Cellulose derivative includes cellulose acetate, hydroxyalkylcellulose, carboxyalkylcellulose, etc.
- Polyvinyl ester includes polyvinyl acetate, polyacrylonitrile, polyvinyl carbazole, polyacrylate ester, polymethacrylate ester, etc.
- Polyolefin includes polyethylene, polyisobutylene, polypropylene, etc.
- Vinyl polymer (excluding polyvinyl ester) includes vinyl chloride, polystyrene, etc.

- Polyalkylene oxide includes polyethylene oxide, polypropylene oxide, etc.

(2) The biodegradable plasticizer may be one or more members selected from phthalate ester, aromatic carboxylate ester, aliphatic dibasic acid ester, aliphatic ester derivative, phosphate ester, polyester plasticizer, epoxy plasticizer, and polymeric plasticizer.

Specific examples of these plasticizers are given below.

- Phthalate ester includes dimethyl phthalate, diethyl phthalate, dibutyl phthalate, dioctyl phthalate, ethylphthalyl

ethyl glycolate, ethylphthalyl butyl glycolate, etc.

- Aliphatic dibasic acid ester includes butyl oleate, glycerin monooleate ester, butyl adipate, n-hexyl adipate, etc.
- Aromatic carboxylate ester includes trioctyl trimellitate, diethylene glycol benzoate, octyl oxybenzoate, etc.
- Aliphatic ester derivative includes sucrose octacetate, diethylene glycol dibenzoate oxyacid ester, methyl acetylrecinolate, triethyl acetylcitrate, triacetin, tripropionin, diacetylglycerin, glycerin monostearate, etc.
- Phosphate ester includes tributyl phosphate, triphenyl phosphate, etc.
- Epoxy plasticizer includes epoxidized soybean oil, epoxidized castor oil, alkylepoxy stearate, etc.
- Polymeric plasticizer includes liquid rubbers, terpenes, linear polyester, etc.

(3) The filler may be one or more members selected from natural inorganic fillers and natural organic fillers.
Specific examples of the filler are given below.

- Inorganic filler includes talc, titanium oxide, clay, chalk, limestone, calcium carbonate, mica, glass, diatomaceous earth, wollastonite, silicates, magnesium salt, manganese salt, glass fiber, ceramic powder, etc.
- Organic filler includes powder of cellulosic fiber (and derivative thereof), wood powder, pulp, pecan fiber, cotton powder, hulls, cotton linter, wood fiber, bagasse, etc.

The dispersing type agent denotes any agent (including thickener and suspension agent together with normal dispersing agent) that promotes and maintains the dispersion of a dispersoid. The dispersing agent may be one or more members selected from the following examples. Examples of the dispersing agent include salt of fatty acid (having 4-18 carbon atoms), anionic surface active agents, nonionic surface active agents, cationic or anionic water-soluble synthetic polymers, condensed phosphates, cationic starch derivatives, cellulose derivatives, plant gums and derivatives thereof, animal polymers, microbial polymers, and synthetic polymer emulsions in the form of aqueous emulsion.
Specific examples of the dispersing agent are given below.

- Fatty acid having 4-18 carbon atoms, such as sodium butanoate, potassium octanoate, sodium stearate, etc.
- Nonionic surface active agent, such as alkyl polyalkylene oxide, sucrose fatty acid ester, sorbitan fatty acid ester, dimethylpolysiloxane, etc.
- Anionic surface active agent, such as sodium alkylsulfate, sodium alkyl sulfonate, etc.
- Water-soluble synthetic polymer, such as cationic polyacrylamide, PVA, sodium polyacrylate, polyethylene imine, condensed naphthalenesulfonate, etc.
- Condensed phosphate salt, such as sodium hexametaphosphate, sodium tripolyphosphate, etc.
- Cationic starch derivative, such as corn starch base, tapioca starch base, potato starch base, etc.
- Cellulose derivative, such as carboxymethyl cellulose, carboxyethyl cellullose, hydroxypropyl celulose, cationized cellulose derivative, etc.
- Microbial polymer, such as xanthane gum, polydextrose, etc.
- Plant gum and derivatives thereof, such as gum Arabic, alginic acid, etc.
- Animal high polymer, such as casein, chitosan, etc.
- Synthetic polymer, such as synthetic rubber latex, polyvinyl acetate emulsion, etc.

(D) Applications

The esterified, polyester-grafted starch and the thermoplastic resin composition pertaining to the present invention will find use in a broad range of application areas as follows.

(1) Film and sheet formed by extrusion, casting, rolling, inflation, etc.
(2) Lamination and coating on paper, sheet, film, nonwoven fabric, etc.
(3) Additive to be incorporated into paper during papermaking process to impart special functions to paper and paper products.
(4) Additive to be incorporated into non-woven fabric during its manufacturing process to impart special functions to non-woven fabrics and their products.
(5) Aqueous emulsion or suspension.
(6) Solid or cellular moldings produced by injection molding, extrusion molding, blow molding, transfer molding, compression molding, etc.

<II. Esterified, polyester-grafted starch-polymer alloy >

(A) The esterified, polyester-grafted starch-polymer alloy in the present invention is basically a uniform mixture

of the esterified, polyester-grafted starch-polymer, mentioned above <I>, and a polymer. The polymer is an independent polyester composed of the same unit as said polyester graft side chains.

The esterifying involves one or more saturated or unsaturated aliphatic acids or aromatic carboxylic acids having 2 to 18 carbon atoms. The grafted polyester is a polymer formed by ring-opening polymerization of one or more 4- to 12-membered lactones. The esterifying is accomplished so as to block entirely or partly the hydroxyl groups connected directly to starch, the terminal hydroxyl groups on the polyester side chains, and the terminal hydroxyl groups of the independent polymer.

The esterified, polyester-grafted starch-polymer alloy is represented by the structural formula 2 shown below.

[Structural formula 2]

- Esterified, polyester-grafted starch

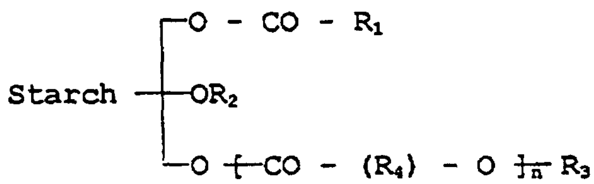

- + Esterified, independent polyester

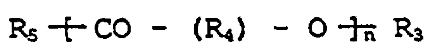

Where, the symbols are same as <I> Esterified, polyester-grafted starch, with exception of $R_5$ in the independent polymer.

Starch is the residue of starch molecule (including low modified starch derivatives),
$R_1$ is any of alkyl groups, alkenyl groups, and aryl groups having 1 to 17 carbon atoms (preferably 1 to 7 carbon atoms),
$R_2$ is hydrogen or an acyl group having 2 to 18 carbon atoms,
$R_3$ is hydrogen or an acyl group having 2 to 18 carbon atoms,
$R_4$ is one or more saturated hydrocarbon groups represented by $C_mH_{2m}$ (m = 1 to 11), and
$R_5$ is an alkoxyl group having less than 10 carbon atoms or a polyalkoxyl group having less than 200 carbon atoms or a hydroxyl group.

The esterified, polyester-grafted starch should have an ester blocking ratio of 15-100% (preferably 21-100%) and a degree of substitution for grafting with polyester (polylactone) of 0.1-20 (preferably 0.2-10).

The alloy should contain the independent polyester (polylactone) in an amount less than 70% (preferably less than 50%).

Both the polyester graft side chain and the independent polyester should have a molecular weight of 500-200000 (preferably 1000-150000).

If the ester blocking ratio is lower than 15%, the resulting resin composition is not improved in moisture absorption, water susceptibility, and moldability. The ester blocking ratio should be as close to 100% as possible so that the resin composition yields moldings which are superior in water resistance and other water-related properties.

If the degree of substitution for graft molecules (MS) is lower than 0.1, the resulting resin composition is plasticizable but does not yields moldings having improved physical properties (while retaining biodegradability). A value of MS in excess of 20 is not practicable from the standpoint of production cost and reaction time.

The amount of the independent polyester in the alloy should be 5 to 70%. It depends on the molecular weight and property regarding the independent polyester and modified starch and the cost-performance balance. With an amount less than 5%, the resulting resin composition is brittle. With an amount in excess of 70%, the resulting resin

composition is poor in stiffness and disadvantageous costwise.

If the molecular weight of the polyester side chain and independent polyester is lower than 500, the resulting resin composition lacks uniformity at the molecular level and has little improvement in physical properties. A molecular weight in excess of 200000 is not desirable from the standpoint of reaction time.

(B) The esterified, polyester-grafted starch-polymer alloy mentioned above may be prepared by any process which is not specifically restricted. One way is to prepare the two components separately and melt-mixing them by heating or by mixing them in the form of solvent solution. However, the following process is preferable.

According to the present invention, the preferred process comprises reacting starch with a vinyl ester, acid anhydride, or acid halide (as an esterifying agent), a lactone (as a grafting agent and also as an agent for the independent polymer) in a nonaqueous organic solvent with the aid of an esterifying/grafting catalyst and a polymerization catalyst (for the independent polymer), thereby performing three reactions, (that is, esterifying, grafting, and polymerization of the independent polymer) simultaneously or sequentially.

Raw starch for the above-mentioned process includes the following.

- Corn starch, high-amylose corn starch, wheat starch, and other unmodified starches originating from terrestrial stems.
- Potato starch, tapioca starch, and other unmodified starches originating from subterranean stems.
- Slightly modified starches prepared from the above-mentioned starches by esterification, etherification, oxidation, acid treatment, and dextrinizing.

These raw starches may be used alone or in combination with one another.

In the case where esterifying, grafting, and polymerization are carried out sequentially, their order is immaterial. Examples of the order are: grafting → polymerization → esterifying; or esterifying → grafting → polymerization → esterification again. It is also possible to use a commercial esterified starch or polyester (polylactone) grafted starch as the starting material. In this case, a vinyl ester, acid anhydride, or acid halide, lactone may be used for grafting, esterifying, or polymerization for the independent polymer.

(B-1) Esterifying:

Esterifying process is similar to that of <I> Esterified, polyester-grafted starch. The vinyl ester used for esterifying is one in which the ester group has 2 to 18 carbon atoms (preferably 2 to 7 carbon atoms). One or more vinyl esters may be used alone or in combination with one another.

(B-2) Grafting:

Grafting process is similar to that of <I> Esterified, polyester-grafted starch. The present invention employs one or more lactones (including dimer and trimer cyclic esters) of from 4- to 12- membered ring as the grafting agent.

(B-3) Polymerization reaction for the independent polymer

Polymerization reaction for the independent polymer proceeds very slowly under the condition for the grafting reaction under normal pressure. Therefore, some measure is necessary in order to accomplish the grafting reaction and the polymerization reaction for the independent polymer simultaneously or sequentially and to attain a prescribed molecular weight within a prescribed period of time. It has been found that the object is achieved by adding a catalyst with a time lag, said catalyst being a metal alkoxide, a hydroxide of an amphoteric metal, or a salt of an amphoteric metal acid, which is particularly effective for the polymerization reaction for the independent polymer which is different from the grafting reaction. It has also been found unexpectedly that the catalyst addition in this way makes it possible to control the content and molecular weight of the independent polymer in the resin composition. This contributes to uniform mixing at molecular level and improvement in physical properties of the resin composition.

The reaction temperature is the same as that for the grafting reaction (usually lower than 200°C, preferably lower than 150°C or lower than 150°C under reduced pressure). This permits a very efficient reaction control.

(C) Biodegradable thermoplastic resin composition

The composition is basically similar to that of <I> where esterified, polyester-grafted starch in <I> is replaced to esterified, polyester-grafted starch-polymer alloy. The biodegradable thermoplastic resin composition pertaining to the present invention is composed of a base polymer and an adjuvant, said base polymer being composed entirely or partly of the esterified, polyester-grafted starch-polymer alloy mentioned above, said adjuvant being a biodegradable

plasticizer, and/or filler, and/or dispersing type agent.

The amount of the esterified, polyester-grafted starch-polymer alloy in the base polymer should be 5-100 wt%, preferably 25-100 wt%. The amount of the plasticizer is usually 0-60 phr, preferably less than 30 phr. The amount of the filler is usually 0-200 phr, preferably 0-150 phr. The amount of the dispersing type agent is usually 0.005-100 phr, preferably 0.01-50 phr.

(D) Applications

The esterified, polyester-grafted starch-polymer alloy, its mixture and the thermoplastic resin composition thereof pertaining to the present invention will find use in a broad range of application areas as well as the case of <I> Esterified, polyester-grafted starch.

[Examples]

The invention will be understood more readily by reference to the following Examples and Comparative Examples; however, these examples are intended to illustrate the invention and are not to be construed to limit the scope of the invention.

In examples, "parts" means "parts by weight" unless otherwise indicated.

<I> Esterified, polyester-grafted starch

A-1: Preparation (synthesis) of esterified, polyester-grafted starch

Example 1-1

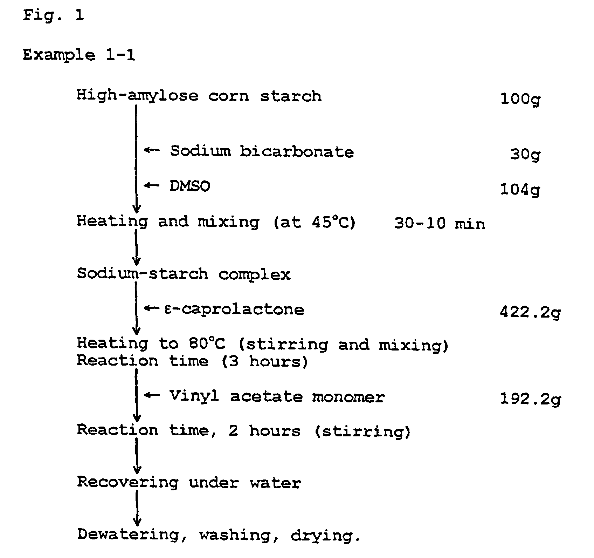

Starch was mixed by heating with a catalyst and a nonaqueous solvent (polar solvent). To the mixture was added ε-caprolactone for grafting and then added vinyl acetate monomer for esterifying. Thus there was obtained an esterified, polyester-grafted starch. The amount of each component is shown in Fig. 1.

Example 1-2

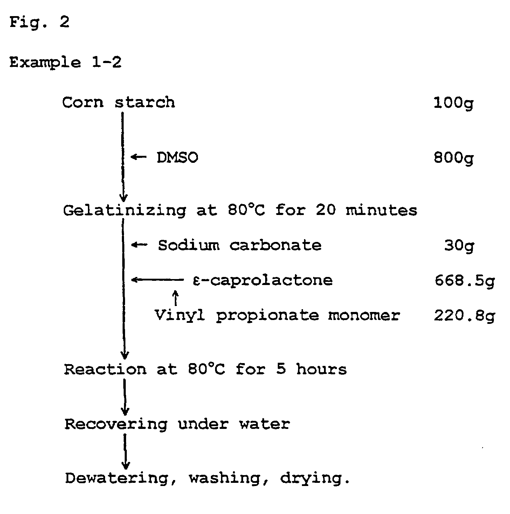

Starch was gelatinized in a polar solvent. To the gelatinized starch were added ε-caprolactone and vinyl propionate monomer so as to carry out esterifying and grafting simultaneously in the presence of a catalyst. Thus there was obtained an esterified, polyester-grafted starch. The amount of each component is shown in Fig. 2.

Example 1-3

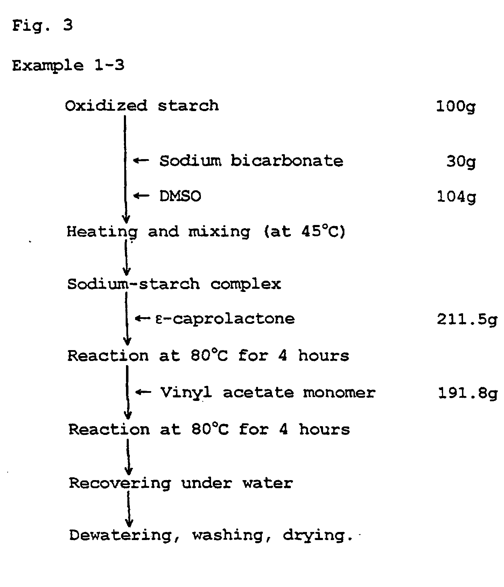

An oxidized starch was mixed by heating with a catalyst and a nonaqueous solvent (polar solvent). To the mixture was added ε-caprolactone for grafting and then added vinyl acetate monomer for esterifying. Thus there was obtained an esterified, polyester-grafted starch. The amount of each component is shown in Fig. 3.

Example 1-4

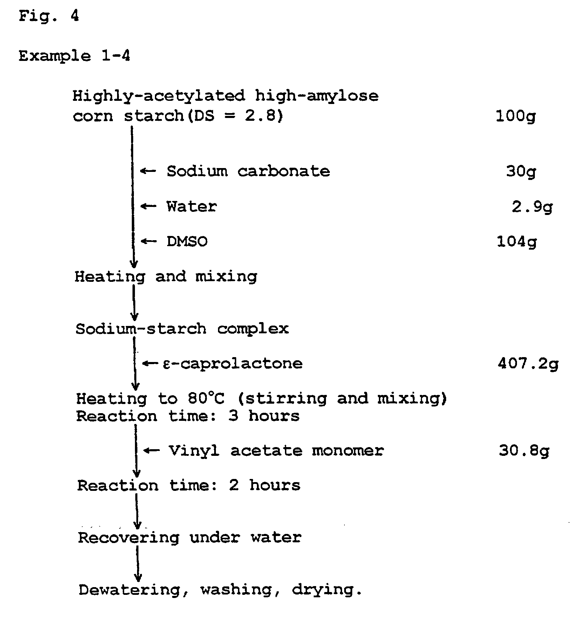

An acetylated starch (having a high degree of substitution) was mixed by heating with water, a catalyst, and a nonaqueous solvent (polar solvent). To the mixture was added ε-caprolactone for grafting and then added vinyl acetate monomer for esterifying. Thus there was obtained an esterified, polyester-grafted starch. The amount of each component is shown in Fig. 4.

Comparative Example 1

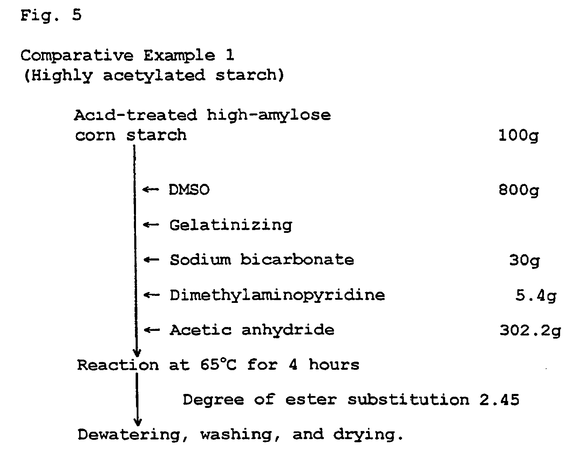

An acid-treated starch was gelatinized in a polar solvent. To the gelatinized starch were added a catalyst and then added acetic anhydride for esterifying. Thus there was obtained an esterified starch with a high degree of substitution. The amount of each component is shown in Fig. 5.

Comparative Example 2

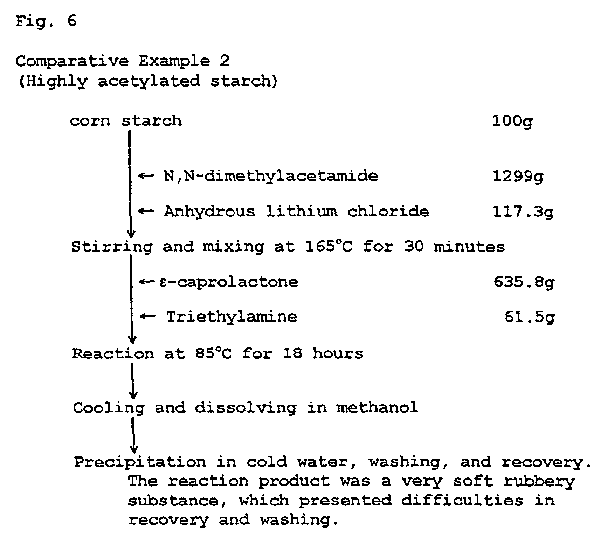

Starch was mixed with a polar solvent and a catalyst (alkali metal salt). To the mixture were added ε-caprolactone and triethylamine (as a catalyst). After reaction, there was obtained a grafted starch. -The amount of each

component is shown in Fig. 6.
A-2: The starch derivatives obtained in the above-mentioned examples and comparative examples were tested for the following items. The results are shown in Table 1-1.
(The process in Comparative Example 2 was modified by replacing cold water by acetone so as to increase the yield.)

(1) Degree of molecular substitution (MS) by grafting

MS was calculated from the above-mentioned formula. In the case of esterified, polyester-grafted starch, the amount of the polyester connected to starch was determined by gas chromatography after acid decomposition. In the case of esterified, polyester-grafted starch-polymer alloy, the amount of the polyester connected to starch was determined by gas chromatography after removal of the independent polyester by Soxhlet extraction with carbon tetrachloride for 24 hours and subsequent acid decomposition.

(2) Degree of substitution (DS) by esterification:

DS is the average number of the reactive hydroxyl groups and the terminal hydroxyl groups of grafted polyester at the positions 2, 3, and 6 on the glucose unit of starch which have been converted into ester bonds. "DS = 3" means 100% substitution.
The reaction products in Examples and Comparative Examples vary in ease with which they are recovered from the aqueous system. The results are shown in Table 1-2.

B-1: Test examples

<u>Test Example 1-1</u>

Resin compositions were prepared from the samples of modified starches obtained in Example 1-1 and Comparative Examples 1 and 2. Each sample (100 parts) was incorporated with a plasticizer (triacetin) in an amount necessary for the resin compositions to exhibit almost the same level of tensile modulus as shown in Table 1-3.
Each resin composition was formed into dumbbell specimen, flexural specimen, disc specimen (conforming to JIS) by injection molding after extrusion at 120°C.
The specimens were tested for the following items according to the test methods indicated after the test item.

(1) Tensile modulus, tensile strength, elongation at break, and elongation in elastic limit: JIS K-7113
(2) Moisture absorption: The small specimen (of type No. 1) is allowed to stand at 23°C and 75%-RH for 96 hours and its weight increase is measured. Moisture absorption is expressed in terms of the ratio of the weight increase to the weight of the specimen measured before conditioning.
(3) Water absorption: The small specimen (of type No. 1) is immersed in water at 20°C for 24 hours and its weight increase is measured. Water absorption is expressed in terms of the ratio of the weight increase (excluding surface water) to the weight of the specimen measured before immersion.

The results are shown in Table 1-3. It is noted that the specimen in Example 1-1, which is incorporated with a less amount of plasticizer, is comparable to the specimens in Comparative Examples 1 and 2 in tensile modulus. In addition, the former is by far superior to the latter in tensile strength and toughness and water-related properties (moisture absorption and water absorption).

<u>Test Example 1-2</u>

Resin compositions were prepared from the samples of modified starches obtained in Example 1-2 and Comparative Examples 1 and 2. Each sample (100 parts) was incorporated with a plasticizer (tripropionin) in an amount necessary for the resulting films to exhibit almost the same level of elongation as shown in Table 1-4.
Each resin composition was made into 30-μm thick film by extrusion at 120°C. This film was laminated onto double-bleached kraft paper (with a basis weight of 125 $g/m^2$) by heat sealing. The resulting laminate paper was tested for the following items according to the test method specified.

(1) Water vapor transmission rate ... JIS Z0208
(2) Water resistance ... (Cobb test for 60 min) JIS P8140
(3) Folding endurans ... JIS P8114 (This is a measure to indicate the ability of the film to retain the plasticizer.)

The results of the tests are shown in Table 1-4. It is noted that the sample in Example 1-2 is by far superior to the samples in Comparative Examples 1 and 2 in water-related properties (water vapor transmission and water resistance) and the ability to retain the plasticizer.

Test Example 1-3

Resin compositions were prepared from the samples of modified starches obtained in Example 1-3 and Comparative Examples 1 and 2. Each sample (100 parts) was incorporated with a plasticizer (triacetin) and a filler (talc) in an amount shown in Table 1-5.
The resulting resin composition was made into test specimens (conforming to JIS K7203) by injection molding under the following conditions. The specimens were tested for flexural strength and flexural modulus.

Molding condition:

Temperature ... 165°C,
Injection pressure ... primary (65%), secondary (35%), tertiary (30%),
Injection molding machine ... PS-40 made by Nissei Jushi Kogyo Co., Ltd.

The results of the tests are shown in Table 1-5. It is noted that the sample in Example 1-3 can accept more inorganic filler than the samples in Comparative Examples 1 and 2 and that the former has a lower flexural modulus and lower stiffness than the latter when the same amount of filler is incorporated.

Test Example 1-4

Resin compositions were prepared from the samples of modified starches obtained in Example 1-4 and Comparative Examples 1 and 2. Each sample (1 g) was mixed with 20 g of shale soil. The mixture was given water so that the maximum water capacity was 60%. The sample was tested for biodegradability by measuring the amount of carbon dioxide gas evolved from the sample by decomposition at 25°C.
The results of the tests are shown in Table 1-6. It is noted that the sample in Example 1-4 is comparable in biodegradability to those in Comparative Examples 1 and 2.

Test Example 1-5

The samples of modified starch obtained in Example 1-4 and Comparative Example 1 were tested for glass transition point by using Shimadzu heat flux differential scanning calorimeter (DSC-50) under the following conditions.

Sample : 8.600 mg, cell : aluminum, gas : nitrogen,
flow rate : 50.00 mL/min, heating rate : 10°C/min,
hold temperature : 220°C

The test results are shown in Table 1-7. It is noted that the sample in Example 1-4 has a lower glass transition temperature than that in Comparative Example 1. This suggests that the former can be molded without plasticizer.
On-set : temperature at which transition begins.
End-set : temperature at which transition is complete.
They define the glass transition temperature region.

<II> Esterified, polyester-grafted starch-polymer alloy

A-1: Preparation (synthesis) of esterified, polyester-grafted starch-polymer alloy or esterified starch

Examples 2-1 to 2-3 and Comparative Examples 1 and 2

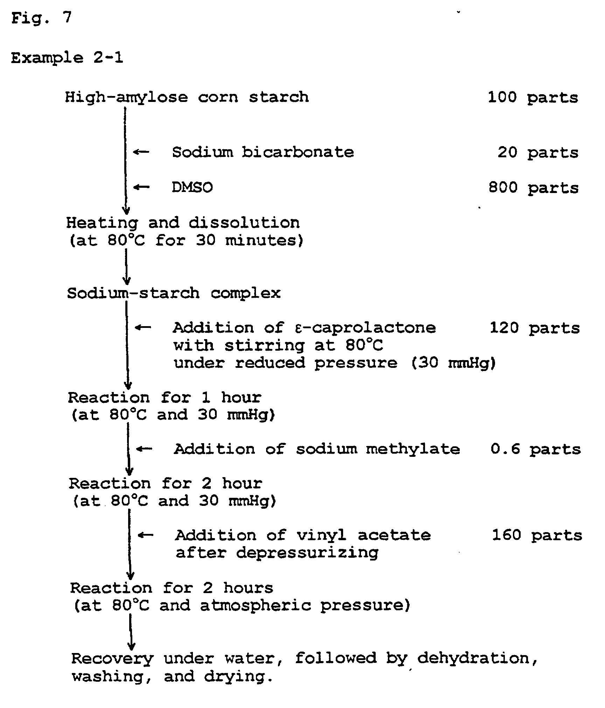

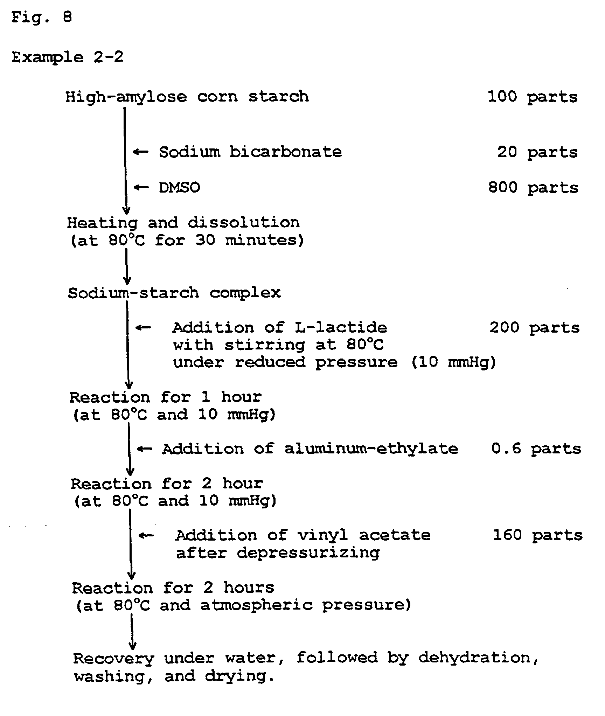

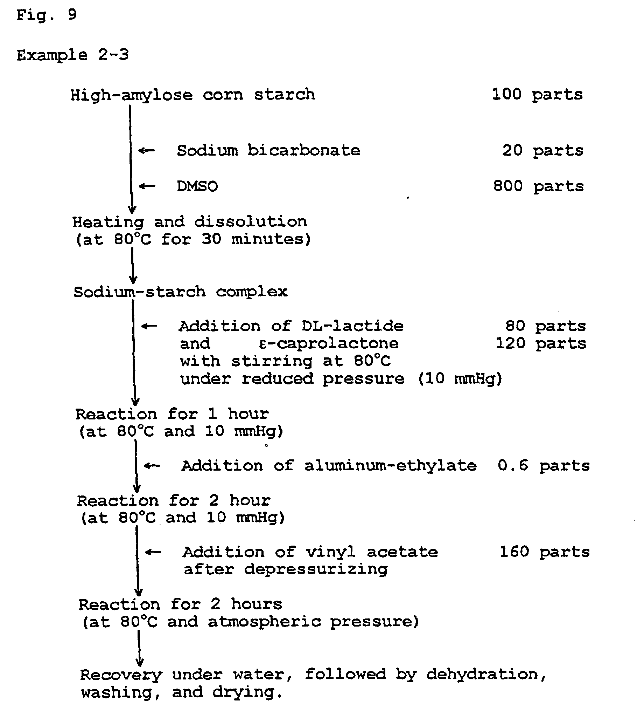

Synthesis of Examples and Comparative Examples and Figs. 5 to 6 respectively was carried out according to the formulation shown in Figs. 7 to 9. The resulting product has a degree of molecular substitution by grafting, a ratio of terminal ester blocking, a content of independent polyester, and a degree of ester substitution, as shown in Table 2-1.

Incidentally, Comparative Examples 1 and 2 are the same as above-mentioned in <1>.

Test Example 2-1

Each product (100 parts) obtained in Example 2-1 and Comparative Examples 1 and 2 was incorporated with a plasticizer (triacetin) in an amount enough for the resulting composition exhibits the same level of tensile elastic modulus. The product obtained in Example 2-1 was not incorporated with plasticizer because it has a low elastic modulus which obviates the necessity of plasticizer.

The product obtained in Example 2-1 is an alloy of grafted-starch and polycaprolactone which are uniformly mixed at the molecular level. The graft moiety is acetylated caprolactone formed by ring-opening polymerization.

The product obtained in Comparative Example 1 is an acetylated starch with a high degree of substitution.

The product obtained in Comparative Example 2 is a grafted starch, with the graft moiety being a polymer formed by ring-opening polymerization of ε-caprolactone.

Each resin composition was tested for the items listed in Table 2-2 by the same method as in Test Example 1-1.

The results are shown in Table 2-2. It is noted that the sample in Example 2-1 does not need plasticizer at all, while the samples in Comparative Examples 1 and 2 need a considerable amount of plasticizer to attain a prescribed level of tensile modulus. In addition, the former is also superior in tensile strength, toughness, and water-relating properties such as moisture absorption.

Test Example 2-2

Each product (100 parts) obtained in Example 2-3 and Comparative Examples 1 and 2 was incorporated with a plasticizer (triacetin) in an amount specified in Table 2-3. The product obtained in Example 2-3 was not incorporated with plasticizer.

The product obtained in Example 2-3 is an alloy of grafted-starch and polymer which are uniformly mixed at the molecular level. The graft moiety is acetylated caprolactone-lactide, and the polymer moiety is polycaprolactone-polylactic acid.

Each resin composition was formed into 30-μm thick film by extrusion at 140°C. This film was laminated onto double-bleached kraft paper (with a basis weight of 125 g/$m^2$) by heat sealing. The resulting laminate paper was tested for the items listed in Table 2-3 according to the same test method as <I> Test Example 1-3.

The test results are shown in Table 2-3. It is noted that the sample in Example 2-3 is by far superior to those in Comparative Examples 1 and 2 in water-relating properties (water vapor transmission and water resistance) and film toughness.

Test Example 2-3

Resin compositions were prepared from the alloys obtained in Example 2-1 and Comparative Examples 1 and 2. Each sample (100 parts) was incorporated with a plasticizer (triacetin) and a filler (talc) in an amount shown in Table 2-4. The resulting resin composition was made into flexural test specimens (conforming to JIS K7203) by injection molding under the following conditions. The specimens were tested for flexural strength and flexural modulus.

Molding condition:

temperature ... 165°C,
injection pressure ... primary (65%), secondary (35%), tertiary (30%),
injection molding machine ... PS-40 made by Nissei Jushi Kogyo Co., Ltd.

The test results are shown in Table 2-4. It is noted that the sample in Example 2-1 can accept more inorganic filler than the samples in Comparative Examples 1 and 2 and that the former has a lower flexural modulus and lower stiffness than the latter when the same amount of filler is incorporated.

Test Example 2-4

Resin compositions were prepared from the alloys obtained in Example 2-1 and Comparative Example 1. Each sample (1 g) was mixed with 20 g of shale soil. The mixture was given water so that the maximum water capacity was 60%. The sample was tested for biodegradability by measuring the amount of carbon dioxide gas evolved from

the sample by decomposition at 25°C. The test results are shown in Table 2-5. It is noted that the sample in Example 2-1 is comparable in biodegradability to that in Comparative Example 1.

Test Example 2-5

The samples of alloys obtained in Example 2-1 and Comparative Example 1 were tested for glass transition point by using Shimadzu heat flux differential scanning calorimeter (DSC-50) under the following conditions.

Sample : 8.600 mg, cell : aluminum, gas : nitrogen,
flow rate : 50.00 mL/min, heating rate : 10°C/min,
hold temperature : 220°C

The test results are shown in Table 2-6. It is noted that the sample in Example 2-1 has a lower glass transition temperature than that in Comparative Example 1. This suggests that the former can be molded without plasticizer.

Test Example 2-6

The product obtained in Example 2-1 was made into a 50-μm thick film by extrusion at 160°C. Each product obtained in Comparative Examples 1 and 2 was incorporated with a plasticizer (triacetin) and ε-caprolactone ("TONE-787" from Union Carbide) in such an amount that the resulting mixture has the same composition as the product in Example 2-1. The components were mixed in the form of solids by using a plastomill. The resulting mixture was also made into a 50-μm thick film by extrusion at 160°C. The film samples were tested for clarity and elongation. (Clarity is expressed in terms of light transmission.)

The test results are shown in Table 2-7. It is noted that the sample in Example 2-1 is by far superior in light transmission and elongation to the samples in Comparative Examples 1 and 2. This result is due to the fact that the sample in Example 2-1 was produced by the competitive reaction of grafting and polymerization which greatly contributes to good compatibility (at the molecular level) of the grafted polyester moiety with the polymer moiety. It is understood that the composition of the present invention is a new one which is not obtained by mere mechanical blending and the novelty of the present invention resides in this manufacturing process.

Table 1-1

| | MS | DS |
|---|---|---|
| Example 1-1 | 2.17 | 1.98 |
| Example 1-2 | 1.24 | 2.57 |
| Example 1-3 | 0.55 | 2.78 |
| Example 1-4 | 0.31 | 2.69 |
| Comparative Example 1 | - | 2.45 |
| Comparative Example 2 | 1.9 | - |

Table 1-2

| | Recovery of reaction products |
|---|---|
| Example 1-1 | White hydrophobic solids that permit easy filtration, washing, and dehydration. |
| Example 1-2 | - ditto - |
| Example 1-3 | - ditto - |
| Example 1-4 | - ditto - |
| Comparative Example 2 | Very soft rubbery substance that presents difficulties in filtration, dispersion washing, and dewatering. |

Table 1-3

| | Condition | Example 1-1 | Comparative Example 1 | Comparative Example 2 |
|---|---|---|---|---|
| Plasticizer (parts) | | 20 | 60 | 30 |
| Tensile modulus | A<br>B | 6538<br>3296 | 5863<br>4165 | 6908<br>1078 |
| Maximum tensile modulus (kg/cm$^2$) | A<br>B | 150.0<br>92.0 | 118.2<br>68.4 | 135.3<br>18.6 |
| Elongation at break (%) | A<br>B | 36.7<br>93.0 | 21.8<br>19.5 | 28.9<br>82.0 |
| Elongation in elastic limit(%) | A<br>B | 11.5<br>12.4 | 3.0<br>4.5 | 8.5<br>4.7 |
| Moisture absorption (%) | B | 3.1 | 3.9 | 9.7 |
| Water absorption (%) | | 3.5 | 5.8 | 11.7 |
| Condition A : measured immediately after conditioning at 23°C and 50%-RH for 72 hours.<br>Condition B : measured after storage at 23°C and 75%-RH for 96 hours. | | | | |

Table 1-4

| | Example 1-2 | Comparative Example 1 | | Comparative Example 2 |
|---|---|---|---|---|
| Plasticizer (parts) | 30 | 50 | 30 | 30 |
| Water vapor transmission rate (g/24 h-m$^2$) | 250 | 945 | 780 | 680 |
| Water resistance (g/m$^2$) | 4.5 | 4.8 | | 10.5 |
| Flexural strength (cycles) | | | | |
| Condition A | 895 | 65 | | 120 |
| Condition B | 1000< | 22 | | 115 |
| Condition A : measured immediately after conditioning at 23°C and 50%-RH for 72 hours.<br>Condition B : measured after storage at 23°C and 75%-RH for 96 hours. | | | | |

Table 1-5

| | | Example 1-3 | Comparative Example 1 | Comparative Example 2 |
|---|---|---|---|---|
| Plasticizer (triacetin) | | 10 | 10 | 10 |
| Flexural strength | Talc: 30 | 298 | 536 | 415 |
| | Talc: 50 | 568 | not moldable | not moldable |
| Flexural modulus | Talc: 30 | 25439 | 62914 | 55200 |
| | Talc: 50 | 57300 | - | - |

Table 1-6

| Amount of carbon dioxide gas evolved (ml) | Example 1-4 | Comparative Example 1 | Comparative Example 2 |
|---|---|---|---|
| After 4 hours | 6.2 | 6.4 | 5.9 |
| After 12 hours | 15.5 | 15.8 | 16.5 |
| After 24 hours | 30.1 | 26.9 | 28.0 |

Table 1-7

| | Example 1-4 | Comparative Example 1 |
|---|---|---|
| On-set | 73.41°C | 177.86°C |
| End-set | 87.24°C | 184.31°C |

Table 2-1

| | Example 2-1 | Example 2-2 | Example 2-3 | Comparative Example 1 | Comparative Example 2 |
|---|---|---|---|---|---|
| Formulation | Fig. 7 | Fig. 8 | Fig. 9 | Fig. 5 | Fig. 6 |
| Degree of molecular substitution for grafting | 0.85 | 2.1 | 1.9 | - | 1.40* |
| Ratio of terminal ester blocking | 40% | 70% | 70% | - | - |
| Content of independent polyester | 25% | 15% | 16% | - | - |
| Degree of ester substitution | - | - | - | 2.45 | - |

* The reaction product was a very soft rubbery substance containing a large amount was water. It presented difficulties in recovery and washing.

Table 2-2

| | Condition | Example 2-1 | Comparative Example 1 | Comparative Example 2 |
|---|---|---|---|---|
| Plasticizer (parts) | | 0 | 45 | 25 |
| Tensile modulus | A | 3300 | 3000 | 3500 |
| Maximum tensile strength (kg/cm$^2$) | A | 63 | 50 | 45 |
| Elongation at break (%) | A | 90 | 30 | 17 |
| Moisture absorption (%) | B | 1.6 | 3.5 | 10.8 |
| Condition A :measured immediately after conditioning at 23°C and 50%-RH for 72 hours.<br>Condition B : measured after storage at 23°C and 75%-RH for 96 hours. | | | | |

Table 2-3

| | Example 2-3 | Comparative Example 1 | Comparative Example 2 |
|---|---|---|---|
| Plasticizer (parts) | 0 | 45 | 25 |
| Water vapor transmission (g/24 h-m$^2$) | 180 | 945 | 570 |
| Water resistance (g/m$^2$) | 4.7 | 4.8 | 12.5 |
| Folding endurans (cycles) | 1000< | 22 | 109 |
| Condition: measured after conditioning at 23°C and 50%-RH for 72 hours. | | | |

Table 2-4

| | | Example 2-1 | Comparative Example 1 | Comparative Example 2 |
|---|---|---|---|---|
| Plasticizer (parts) | | 0 | 10 | 10 |
| Flexural strength | Talc: 30 | 123 | 536 | 490 |
| | Talc: 50 | 412 | not moldable | not moldable |
| Flexural modulus | Talc: 30 | 10177 | 62914 | 55200 |
| | Talc: 50 | 52800 | - | - |

Table 2-5

| Amount of carbon dioxide gas evolved (ml) | Example 2-1 | Comparative Example 1 |
|---|---|---|
| After 4 hours | 8.2 | 6.4 |
| After 12 hours | 18.0 | 15.8 |
| After 24 hours | 28.7 | 26.9 |

Table 2-6

| | Example 2-1 | | Comparative Example 1 |
|---|---|---|---|
| On-set | -28.05°C | 22.48°C | 177.86°C |
| End-set | -17.87°C | 31.15°C | 184.31°C |

On-set : temperature at which transition begins. End-set : temperature at which transition is complete. Both referred to as glass transition point region.

Table 2-7

| | Example 2-1 | Comparative Example 1 | Comparative Example 2 |
|---|---|---|---|
| Plasticizer (parts) | 0 | 50 | 30 |
| Amount of TONE-787 (%/resin) | 0 | 25 | 25 |
| Light transmission (%) | 72 | 45 | 61 |
| Elongation (%) | 450 | 170 | 210 |

**Claims**

1. An esterified, polyester-grafted starch which is formed by esterifying starch and grafting starch with polyester, **characterized in that** the esterification involves one or more saturated or unsaturated aliphatic acids or aromatic carboxylic acids having 2 to 18 carbon atoms and the polyester is one which is formed from one or more 4- to 12-membered lactones by ring-opening polymerization, with the terminal hydroxyl groups being almost completely blocked by esterification.

2. The esterified, polyester-grafted starch as claimed in Claim 1, wherein the esterification is in such a state that the degree of substitution (DS) is 0.1 to 3.0 and the grafting with polyester is in such a state that the degree of molecular substitution is 0.1 to 20.

3. A process for synthesis of the esterified, polyester-grafted starch defined in Claim 1, said process comprising reacting starch with a vinyl ester or an acid anhydride or an acid chloride (as an esterifying agent) and a lactone (as a grafting agent) in a nonaqueous organic solvent with the aid of an esterifying/grafting catalyst, thereby performing the esterifying and grafting reactions simultaneously or sequentially.

4. The process as claimed in Claim 3, wherein the nonaqueous organic solvent is an organic solvent capable of dissolving starch and/or an organic solvent incapable of dissolving starch but capable of dissolving (or miscible with) the vinyl esters, the lactones and the esterified, polyester-grafted starch.

5. The process as claimed in Claim 3, wherein said esterifying/grafting catalyst is any one member selected from the group consisting of (1) the hydroxide, mineral acid salt, carbonate, and alkoxide of a metal belonging to alkali metals, alkaline earth metals, and amphoteric metals, (2) an organic phase transfer catalyst such as dimethylaminopyridine, and (3) amino compounds such as quaternary ammonium salts.

6. The process as claimed in any of claims 3 to 5, wherein said esterifying and/or grafting catalyst is impregnated into raw starch prior to its use.

7. The process as claimed in Claim 3, wherein said esterifying/grafting catalyst is any one member selected from the group consisting of alkali metal hydroxides, basic alkali metal salts, and metal alkoxides.

8. The process as claimed in Claim 3, wherein starch is mixed by heating with said esterifying/grafting catalyst and a nonaqueous organic solvent capable of dissolving starch and the resulting mixture is reacted with said esterifying reagent and then with said grafting reagent.

9. The process as claimed in Claim 3, wherein an esterified starch with a high degree of substitution (DS : 2.0 or above) is deesterified by said esterifying/grafting catalyst and water (as a deesterifying agent) and then reacted with a grafting reagent and subsequently with an esterifying reagent.

10. A biodegradable thermoplastic resin composition which comprises a base polymer and an optional adjuvant, said base polymer being composed entirely or partly of the esterified, polyester-grafted starch defined in Claim 1, said optional adjuvant being a biodegradable plasticizer and/or filler.

11. The biodegradable thermoplastic resin composition as claimed in Claim 10, wherein the base polymer is composed of the esterified, polyester-grafted starch and a polymer which is one or more members selected from the group consisting of ester- and/or ether-modified starches, biodegradable polyesters, cellulose derivatives, polyvinyl alcohol, and polylactone.

12. The biodegradable thermoplastic resin composition as claimed in Claim 10 or 11, wherein the biodegradable plasticizer is one or more members selected from the group consisting of phthalate esters, aromatic carboxylate esters, aliphatic dibasic acid esters, aliphatic acid ester derivatives, phosphate esters, polyester plasticizers, epoxy plasticizers, and polymeric plasticizers.

13. The biodegradable thermoplastic resin composition as claimed in any of Claims 10 to 12, wherein the filler is one or more members selected from the group consisting of natural inorganic fillers, natural organic fillers, and synthetic fillers.

14. An esterified, polyester-grafted starch-polymer alloy which comprises an esterified, polyester-grafted starch (defined below) and an independent polyester (defined below) which are uniformly mixed together.

(a) Esterified, Polyester-grafted starch : A starch which has polyester graft chains on the starch molecule, with the terminal hydroxyl groups of the polyester graft chains and the hydroxyl groups connected directly to the starch entirely or partly blocked with the ester group.
(b) Independent polyester : A polyester which is constructed of the same unit as said polyester graft chain, with its terminal hydroxyl groups entirely or partly blocked with the ester group.

15. An esterified, polyester-grafted starch-polymer alloy as claimed in Claim 14, wherein the independent polyester accounts for 5 to 70 wt% therein.

16. An esterified, polyester-grafted starch-polymer alloy as claimed in Claim 14 or 15, wherein 15 to 100% of the hydroxyl groups therein is blocked by esterification, the degree of molecular substitution by polyester grafting is 0.1 to 20, and the molecular weight of the polyester graft chain and the independent polyester is 500 to 200000.

17. A process for synthesis of the esterified, polyester-grafted starch-polymer alloy defined in any of claims 14 to 16,

said process comprising dissolving starch, together with an esterifying/grafting catalyst, in a non-aqueous organic solvent by heating, reacting the starch with lactone (including dimer and trimer) as a grafting agent, adding a catalyst for the ring-opening polymerization of lactone at the intermediate stage of reaction, thereby carrying out simultaneously the reaction to graft the polymer of lactone to the starch and the reaction to form the independent polyester, and subsequently adding an esterifying agent, thereby blocking simultaneously all or part of the terminal hydroxyl groups of the polyester graft chain, the terminal hydroxyl groups of the molecular miscible polymer, and the hydroxyl groups connected directly to the starch.

**18.** The process as claimed in Claim 17, wherein the monomer which undergoes polymerization reaction is at least one species of 4- to 12-membered lactone in the form of monomer or oligomer.

**19.** The process as claimed in Claim 17, wherein the polymerization reaction is carried out under a reduced pressure lower than 200 mmHg and at a temperature lower than 200°C.

**20.** The process as claimed in Claim 17, wherein the esterifying agent is a vinyl ester, carboxylic acid anhydride, or carboxylic acid halide whose ester reaction residue has 2 to 18 carbon atoms.

**21.** The process as claimed in claim 17, wherein the esterifying/grafting catalyst is any one or more of the hydroxide, mineral acid salt, carbonate, and alkoxide of a metal belonging to alkali metals, alkaline earth metals, and amphoteric metals.

**22.** The process for synthesis of the esterified, polyester-grafted starch-polymer alloy as claimed in Claim 17, wherein the catalyst for the polymerization reaction of the independent polyester is (1) any one or more of the hydroxide, mineral acid salt, carbonate, and alkoxide of a metal belonging to alkali metals, alkaline earth metals, and amphoteric metals, and (2) a compound which has an amine group in its building block.

**23.** A biodegradable thermoplastic resin composition which comprises a base polymer and an optional adjuvant, said base polymer being composed entirely or partly of the esterified, polyester-grafted starch-polymer alloy defined in Claim 14.

**24.** A biodegradable thermoplastic resin composition as claimed in Claim 23, wherein the adjuvant is a biodegradable plasticizer whose amount is 1-90 parts by weight for 100 parts by weight of the base polymer.

**25.** A biodegradable thermoplastic resin composition as claimed in Claim 24, which contains as an additional adjuvant a dispersing agent in an amount of 0.001 to 100 parts by weight for 100 parts by weight of the base polymer.

**26.** A biodegradable thermoplastic resin composition as claimed in Claim 23, which contains as the adjuvant an organic/inorganic filler in an amount of 1 to 70 parts by weight for 100 parts by weight of the base polymer.

**27.** A biodegradable thermoplastic resin composition as claimed in Claim 26, which contains as an additional adjuvant a dispersing agent in an amount of 0.001 to 100 parts by weight for 100 parts by weight of the base polymer.

**28.** A biodegradable thermoplastic resin composition as claimed in Claim 23, which contains as the adjuvant a dispersing agent in an amount of 0.001 to 100 parts by weight for 100 parts by weight of the base polymer.

**29.** A biodegradable thermoplastic resin composition as claimed in Claim 23, which is composed of 100 parts by weight of base polymer, 1-90 parts by weight of biodegradable plasticizer, and 1-70 parts by weight of organic/inorganic filler.

**30.** A biodegradable thermoplastic resin composition as claimed in claim 29, which contains as an additional adjuvant a dispersing agent in an amount of 0.001 to 100 parts by weight for 100 parts by weight of the base polymer.

**31.** A biodegradable thermoplastic resin composition as claimed in Claim 23, wherein the polymer to be incorporated into the esterified, polyester-grafted starch-polymer alloy is one or more members selected from the group consisting of esterified and/or etherified starch derivatives, olefin polymers, vinyl polymers, polyesters, polyamides, alkoxide polymers, and cellulose derivatives.

**32.** A biodegradable thermoplastic resin composition as claimed in Claim 24, wherein the biodegradable plasticizer is

one or more members selected from the group consisting of phthalate esters, aromatic carboxylate esters, aliphatic dibasic acid esters, aliphatic acid ester derivatives, phosphate esters, polyester plasticizers, epoxy plasticizers, and polymeric plasticizers.

**33.** A biodegradable thermoplastic resin composition as claimed in Claim 26, wherein the filler is one or more members selected from the group consisting of natural inorganic fillers, natural organic fillers, and synthetic fillers.

**34.** A biodegradable thermoplastic resin composition as claimed in Claim 28, wherein the dispersing agent is one or more members selected from the group consisting of metal salt of fatty acid, anionic surface active agent, nonionic surface active agents, cationic or anionic water-soluble synthetic polymers, condensed phosphates, cationic starch derivatives, cellulose derivatives, plant gums and derivatives thereof, animal polymers, microbial polymers, and synthetic polymer emulsions.

**Patentansprüche**

**1.** Veresterte, mit Polyester gepfropfte Stärke, die durch Verestern von Stärke und Pfropfen der Stärke mit Polyester hergestellt ist, **dadurch gekennzeichnet, dass** an der Veresterung eine oder mehr gesättigte oder ungesättigte Carbonsäuren mit 2 bis 18 Kohlenstoffatomen beteiligt sind und der Polyester ein solcher ist, der aus einem oder mehr 4- bis 12-gliedrigen Lactonen durch Ringöffnungspolymerisation gebildet ist, wobei die endständigen Hydroxylgruppen fast vollständig durch die Veresterung blockiert sind.

**2.** Veresterte, mit Polyester gepfropfte Stärke nach Anspruch 1, worin die Veresterung in einem Zustand ist, dass der Substitutionsgrad (DS) 0,1 bis 3,0 beträgt und die Pfropfung mit dem Polyester in einem Zustand ist, dass der molekulare Substitutionsgrad 0,1 bis 20 beträgt.

**3.** Verfahren für die Synthese der veresterten, mit Polyester gepfropften Stärke nach Anspruch 1, bei dem die Stärke mit einem Vinylester oder einem Säureanhydrid oder einem Säurechlorid (als Veresterungsmittel) und einem Lacton (als Pfropfmittel) in einem nicht-wässrigen organischen Lösungsmittel mit Unterstützung eines Katalysators für die Veresterung/Pfropfung umgesetzt wird, wobei auf diese Weise die Veresterungs- und Pfropfungsreaktionen gleichzeitig oder nacheinander durchgeführt werden.

**4.** Verfahren nach Anspruch 3, worin das nicht-wässrige organische Lösungsmittel ein organisches Lösungsmittel ist, das die Stärke lösen kann und/oder ein organisches Lösungsmittel ist, das die Stärke nicht lösen, jedoch die Vinylester, die Lactone und die veresterte, mit Polyester gepfropfte Stärke lösen kann (oder damit mischbar ist).

**5.** Verfahren nach Anspruch 3, worin der Katalysator für die Veresterung/Pfropfung ein solcher ist, der aus der Gruppe gewählt ist, die aus (1) einem Hydroxid, einem Mineralsäuresalz, einem Carbonat und Alkoxid eines Metalls, das zu den Alkalimetallen, Erdalkalimetallen und amphoteren Metallen gehört, (2) einem organischen Phasenübertragungskatalysator, wie Dimethylaminopyridin und (3) Aminoverbindungen, wie quarternäre Ammoniumsalze, besteht.

**6.** Verfahren nach einem der Ansprüche 3 bis 5, worin der Katalysator für die Veresterung und/oder Pfropfung in die Rohstärke vor seiner Verwendung imprägniert wird.

**7.** Verfahren nach Anspruch 3, worin der Katalysator für die Veresterung/Pfropfung ein solcher ist, der aus der Gruppe gewählt ist, die aus Alkalimetallhydroxiden, basischen Alkalimetallsalzen und Metallalkoxiden besteht.

**8.** Verfahren nach Anspruch 3, worin die Stärke unter Erhitzen mit dem Katalysator für die Veresterung/Pfropfung in einem nicht-wässrigen organischen Lösungsmittel, das die Stärke lösen kann, vermischt wird und die erhaltene Mischung mit dem Veresterungsreagenz und dann mit dem Pfropfreagenz umgesetzt wird.

**9.** Verfahren nach Anspruch 3, worin eine verestere Stärke mit einem hohen Substitutionsgrad (DS : 2,0 oder darüber) durch den Katalysator für die Veresterung/Pfropfung und Wasser (als Entesterungsmittel) entestert wird und dann mit einem Pfropfreagenz und anschließend mit einem Veresterungsreagenz umgesetzt wird.

**10.** Bioabbaubare thermoplastische Harzzusammensetzung, die ein Basispolymer und wahlweise ein Hilfsmittel enthält, wobei das Basispolymer ganz oder teilweise aus der veresterten, mit Polyester gepfropften Stärke nach

Anspruch 1 zusammengesetzt ist und das wahlweise verwendete Hilfsmittel ein bioabbaubarer Weichmacher und/oder Füllstoff ist.

**11.** Bioabbaubare thermoplastische Harzzusammensetzung nach Anspruch 10, worin das Basispolymer aus der veresterten, mit Polyester gepfropften Stärke zusammengesetzt ist und das Polymer ein oder mehr Reaktionsteilnehmer darstellt, die aus der Gruppe gewählt sind, die aus ester- und/oder ethermodifizierten Stärken, bioabbaubaren Polyestern, Cellulosederivaten, Polyvinylalkohol und Polylacton bestehen.

**12.** Bioabbaubare thermoplastische Harzzusammensetzung nach Anspruch 10 oder 11, worin der bioabbaubare Weichmacher ein oder mehr Reaktionsteilnehmer darstellt, die aus der Gruppe gewählt sind, die aus Phthalatestern, aromatischen Carboxylatestern, aliphatischen dibasischen Säureestern, aliphatischen Säureesterderivaten, Phosphatestern, Polyesterweichmachern, Epoxidweichmachern und polymeren Weichmachern gewählt sind.

**13.** Bioabbaubare thermoplastische Harzzusammensetzung nach einem der Ansprüche 10 bis 12, worin der Füllstoff ein oder mehr Reaktionsteilnehmer darstellt, die aus der Gruppe gewählt sind, die aus natürlichen anorganischen Füllstoffen, natürlichen organischen Füllstoffen und synthetischen Füllstoffen bestehen.

**14.** Veresterte, mit Polyester gepfropfte Stärke/Polymer-Legierung, die eine veresterte, mit Polyester gepfropfte Stärke (wird unten definiert) und einen unabhängigen Polyester (wird nachfolgend definiert) enthält, die gleichmäßig miteinander vermischt sind.

(a) Veresterte, mit Polyester gepfropfte Stärke: Stärke, die Polyesterpfropfketten am Stärkemolekül aufweist, wobei die endständigen Hydroxylgruppen der Polyesterpfropfketten und die Hydroxylgruppen, die direkt mit der Stärke verbunden sind, vollständig oder teilweise mit den Estergruppen blockiert sind.
(b) Unabhängiger Polyester: Polyester, der aus der gleichen Einheit wie die Polyesterpfropfkette zusammengesetzt ist, wobei seine endständigen Hydroxylgruppen ganz oder teilweise mit der Estergruppe blockiert sind.

**15.** Veresterte, mit Polyester gepfropfte Stärke/Polymer-Legierung nach Anspruch 14, worin der unabhängige Polyester darin zu 5 bis 70 Gew-% enthalten ist.

**16.** Veresterte, mit Polyerster gepfropfte Stärke/Polymer-Legierung nach Anspruch 14 oder 15, worin 15 bis 100 % der Hydroxylgruppen darin durch Veresterung blockiert sind, der molekulare Substitutionsgrad durch die Polyesterpfropfung 0,1 bis 20 beträgt und das Molekulargewicht der Polyesterpfropfkette und des unabhängigen Polyesters 500 bis 200.000 beträgt.

**17.** Verfahren für die Synthese der veresterten, mit Polyester gepfropften Stärke/Polymer-Legierung nach einem der Ansprüche 14 bis 16, bei dem die Stärke zusammen mit einem Katalysator für die Veresterung/Pfropfung in einem nicht-wässrigen organischen Lösungsmittel durch Erhitzen gelöst wird, die Stärke mit einem Lacton (einschließlich Dimer und Trimer) als Pfropfmittel umgesetzt wird, ein Katalysator für die Ringöffnungspolymerisation des Lactons in einer Zwischenstufe der Reaktion hinzugegeben wird, wodurch dann die Reaktion für die Pfropfung des Polymerlactons an die Stärke und die Reaktion zur Bildung des unabhängigen Polyesters gleichzeitig durchgeführt werden und anschließend ein Veresterungsmittel hinzugegeben wird, um alle oder ein Teil der endständigen Hydroxylgruppen der Polyesterpfropfkette, der endständigen Hydroxylgruppe des molekularen mischbaren Polymers und die Hydroxyl-gruppen, die direkt mit der Stärke verbunden sind, gleichzeitig zu blockieren.

**18.** Verfahren nach Anspruch 17, worin das Monomer, das die Polymerisationsreaktion durchläuft, mindestens eine Spezies eines 4- bis 12-gliedrigen Lactons in Form eines Monomers oder Oligomers ist.

**19.** Verfahren nach Anspruch 17, worin die Polymerisationsreaktion unter vermindertem Druck, der niedriger als 200 mmHg ist, und bei einer Temperatur, die niedriger als 200°C ist, durchgeführt wird.

**20.** Verfahren nach Anspruch 17, worin das Veresterungsmittel ein Vinylester, Carbonsäureanhydrid oder ein Carbonsäurehalogenid ist, dessen Veresterungsrest 2 bis 18 Kohlenstoffatome aufweist.

**21.** Verfahren nach Anspruch 17, worin der Katalysator für die Veresterung/Pfropfung eine oder mehr Spezies darstellt, die aus dem Hydroxid, dem Mineralsäuresalz, dem Carbonat und Alkoxid eines Metalls, das zu Alkalimetallen, Erdalkalimetallen und amphoteren Metallen gehört, gewählt ist.

22. Verfahren für die Synthese der veresterten, mit Polyester gepfropften Stärke/Polymer-Legierung nach Anspruch 17, worin der Katalysator für die Polymerisierungsreaktion des unabhängigen Polyesters (1) eine oder mehr Spezies des Hydroxids, des Mineralsäuresalzes, Carbonats und Alkoxids eines Metalls, das zu Alkalimetallen, Erdalkalimetallen und amphoteren Metallen gehört und (2) eine Verbindung, die eine Amingruppe in ihrem Baueinheitsblock aufweist, ist.

23. Bioabbaubare plastische Harzzusammensetzung, die ein Basispolymer und wahlweise ein Hilfsmittel enthält, wobei das Basispolymer ganz oder teilweise aus der veresterten, mit Polyester gepfropften Stärke/Polymer-Legierung nach Anspruch 14 zusammengesetzt ist.

24. Bioabbaubare thermoplastische Harzzusammensetzung nach Anspruch 23, worin das Hilfsmittel ein bioabbaubarer Weichmacher ist, dessen Menge 1 - 90 Gew.-teile auf 100 Gew.-teile des Basispolymers ausmacht.

25. Bioabbaubare thermoplastische Harzzusammensetzung nach Anspruch 24, die als weiteres Hilfsmittel ein Dispergiermittel in einer Menge von 0,001 bis 100 Gew.-teilen auf 100 Gew.-teile des Basispolymers enthält.

26. Bioabbaubare thermoplastische Harzzusammensetzung nach Anspruch 23, die als Hilfsmittel einen organischen/anorganischen Füllstoff in einer Menge von 1 bis 70 Gew.-teilen auf 100 Gew.-teile des Basispolymers enthält.

27. Bioabbaubare thermoplastische Harzzusammensetzung nach Anspruch 26, die als zusätzliches Hilfsmittel ein Dispergiermittel in einer Menge von 0,001 bis 100 Gew.-teilen auf 100 Gew.-teile des Basispolymers enthält.

28. Bioabbaubare thermoplastische Harzzusammensetzung nach Anspruch 33, die als Hilfsmittel ein Dispergiermittel in einer Menge von 0,001 bis 100 Gew.-teilen auf 100 Gew.-teile des Basispolymers enthält.

29. Bioabbaubare thermoplastische Harzzusammensetzung nach Anspruch 23, die aus 100 Gew.-teilen des Basispolymers, 1 - 90 Gew.-teilen des bioabbaubaren Weichmachers und 1 - 70 Gew.-teilen eines organischen/anorganischen Füllstoffs zusammensetzt ist.

30. Bioabbaubare thermoplastische Harzzusammensetzung nach Anspruch 29, die als zusätzliches Hilfsmittel ein Dispergiermittel in einer Menge von 0,001 bis 100 Gew.-teilen auf 100 Gew.-teile des Basispolymers enthält.

31. Bioabbaubare thermoplastische Harzzusammensetzung nach Anspruch 23, worin das Polymer, das in die veresterte, mit Polyester gepfropfte Stärke/Polymer-Legierung eingegeben werden soll, ein oder mehr Reaktionsteilnehmer darstellt, die aus der Gruppe gewählt sind, die aus veresterten und/oder veretherten Stärkederivaten, Olefinpolymeren, Vinylpolymeren, Polyestern, Polyamiden, Alkoxidpolymeren und Cellulosederivaten bestehen.

32. Bioabbaubare thermoplastische Harzzusammensetzung nach Anspruch 24, worin der bioabbaubare Weichmacher ein oder mehrere Reaktionsteilnehmer darstellt, die aus der Gruppe gewählt sind, die aus Phthalatestern, aromatischen Carboxylatestern, aliphatischen dibasischen Säureestern, aliphatischen Säureesterderivaten, Phosphatestern, Polyesterweichmachern, Epoxidweichmachern und polymeren Weichmachern bestehen.

33. Bioabbaubare thermoplastische Harzzusammensetzung nach Anspruch 26, worin der Füllstoff ein oder mehr Reaktionsteilnehmer darstellt, die aus der Gruppe gewählt sind, die aus natürlichen anorganischen Füllstoffen, natürlichen organischen Füllstoffen und synthetischen Füllstoffen bestehen.

34. Bioabbaubare thermoplastische Harzzusammensetzung nach Anspruch 28, worin das Dispergiermittel ein oder mehr Reaktionsteilnehmer darstellt, die aus der Gruppe gewählt sind, die aus einem Metallsalz einer Fettsäure, einem anionischen oberflächenaktiven Mittel, nichtionischen oberflächenaktiven Mitteln, kationischen oder anionischen wasserlöslichen synthetischen Polymeren, kondensierten Phosphaten, kationischen Stärkederivaten, Cellulosederivaten, Pflanzengummis und Derivaten davon, tierischen Polymeren, mikrobiellen Polymeren und synthetischen Polymeremulsionen bestehen.

## Revendications

1. Amidon estérifié, greffé à un polyester, qui est formé par estérification d'amidon et par greffage d'amidon avec un polyester, **caractérisé en ce que** l'estérification fait appel à un ou plusieurs acides aliphatiques saturés ou insaturés ou un ou plusieurs acides carboxyliques aromatiques, comportant 2 à 18 atomes de carbone et le polyester est un polyester qui est formé à partir d'une ou de plusieurs lactones de 4 à 12 chaînons par polymérisation avec ouverture de cycle, les groupes hydroxyle terminaux étant pratiquement tous bloqués par estérification.

**2.** Amidon estérifié, greffé à un polyester selon la revendication 1, dans lequel l'estérification est réalisée de telle manière que le degré de substitution (DS) est de 0,1 à 3,0 et le greffage avec le polyester est réalisé de telle manière que le degré de substitution moléculaire est de 0,1 à 20.

**3.** Procédé de synthèse de l'amidon estérifié, greffé à un polyester selon la revendication 1, ledit procédé comprenant la réaction d'amidon avec un ester vinylique ou un anhydride d'acide ou avec un chlorure d'acide (en tant qu'agent d'estérification) et d'une lactone (en tant qu'agent de greffage) dans un solvant organique non aqueux à l'aide d'un catalyseur d'estérification/greffage, afin de réaliser les réactions d'estérification et de greffage simultanément ou successivement.

**4.** Procédé selon la revendication 3, dans lequel le solvant organique non aqueux est un solvant organique capable de dissoudre l'amidon et/ou un solvant organique incapable de dissoudre l'amidon mais capable de dissoudre (ou miscible avec) les esters vinyliques, les lactones et l'amidon estérifié, greffé à un polyester.

**5.** Procédé selon la revendication 3, dans lequel ledit catalyseur d'estérification/greffage est un élément quelconque choisi dans le groupe constitué par (1) l'hydroxyde, le sel d'acide minéral, le carbonate et l'alkylate d'un métal appartenant aux métaux alcalins, aux métaux alcalino-terreux, et aux métaux amphotères, (2) un catalyseur organique par transfert de phase, tel que la diméthylaminopyridine, et (3) les composés amino, tels que les sels d'ammonium quaternaire.

**6.** Procédé selon l'une quelconque des revendications 3 à 5, dans lequel ledit catalyseur d'estérification et/ou de greffage est imprégné dans de l'amidon brut avant son utilisation.

**7.** Procédé selon la revendication 3, dans lequel ledit catalyseur d'estérification/greffage est un élément quelconque choisi dans le groupe constitué par les hydroxydes de métaux alcalins, les sels basiques de métaux alcalins et les alkylates de métaux.

**8.** Procédé selon la revendication 3, dans lequel l'amidon est mélangé sous chauffage avec ledit catalyseur d'estérification/greffage et un solvant organique non aqueux capable de dissoudre l'amidon et le mélange résultant est mis à réagir avec ledit réactif d'estérification, puis avec ledit réactif de greffage.

**9.** Procédé selon la revendication 3, dans lequel un amidon estérifié ayant un degré de substitution élevé (DS : 2,0 ou plus) est désestérifié avec ledit catalyseur d'estérification/greffage et de l'eau (en tant qu'agent de désestérification), et est ensuite mis à réagir avec un réactif de greffage et ensuite avec un réactif d'estérification.

**10.** Composition de résine thermoplastique biodégradable qui comprend un polymère de base et un adjuvant facultatif, ledit polymère de base étant composé entièrement ou en partie de l'amidon estérifié greffé à un polyester selon la revendication 1, ledit adjuvant facultatif étant un plastifiant et/ou une charge biodégradable.

**11.** Composition de résine thermoplastique biodégradable selon la revendication 10, dans laquelle le polymère de base est composé de l'amidon estérifié greffé à un polyester et d'un polymère qui est un ou plusieurs éléments choisis dans le groupe constitué par les amidons modifiés par un ester et/ou un éther, les polyesters biodégradables, les dérivés de cellulose, le poly(alcool vinylique) et une polylactone.

**12.** Composition de résine thermoplastique biodégradable selon la revendication 10 ou 11, dans laquelle le plastifiant biodégradable est un ou plusieurs éléments choisis dans le groupe constitué par les esters phtalate, les esters carboxylate aromatiques, les esters de diacides aliphatiques, les dérivés d'esters d'acides aliphatiques, les esters phosphate, les plastifiants à base de polyester, les plastifiants à base d'un époxy, et les plastifiants polymères.

**13.** Composition de résine thermoplastique biodégradable selon l'une quelconque des revendications 10 à 12, dans laquelle la charge est un ou plusieurs éléments choisis dans le groupe constitué par les charges minérales naturelles, les charges organiques naturelles, et les charges synthétiques.

**14.** Alliage amidon estérifié greffé à une polyester-polymère qui comprend un amidon estérifié greffé à une polyester

(défini ci-dessous) et un polyester indépendant (défini ci-dessous) qui sont mélangés uniformément ensemble:

(a) L'amidon estérifié greffé à un polyester : un amidon qui possède des chaînes de greffage polyester sur la molécule d'amidon, les groupes hydroxyle terminaux des chaînes de greffage polyester et les groupes hydroxyle reliés directement à l'amidon étant totalement ou partiellement bloqués par le groupe ester.

(b) Le polyester indépendant : un polyester qui est constitué du même motif que ladite chaîne de greffage polyester, ses groupes hydroxyle terminaux étant totalement ou partiellement bloqués par le groupe ester.

**15.** Alliage amidon estérifié greffé à une polyester-polymère selon la revendication 14, dans lequel le polyester indépendant constitue 5 à 70 % de celui-ci.

**16.** Alliage amidon estérifié greffé à une polyester-polymère selon la revendication 14 ou 15, dans lequel 15 à 100 % des groupes hydroxyle de celui-ci sont bloqués par estérification, le degré de substitution moléculaire par greffage avec un polyester est de 0,1 à 20, et la masse moléculaire de la chaîne de greffage polyester et du polyester indépendant est de 500 à 200 000.

**17.** Procédé de synthèse de l'alliage amidon estérifié greffé à une polyester-polymère selon l'une quelconque des revendications 14 à 16, ledit procédé comprenant la dissolution de l'amidon, avec un catalyseur d'estérification/ greffage, dans un solvant organique non aqueux sous chauffage, la réaction de l'amidon avec une lactone (y compris un dimère et un trimère) en tant qu'agent de greffage, l'addition d'un catalyseur pour la polymérisation avec ouverture de cycle de la lactone à un stade intermédiaire de la réaction, afin de réaliser simultanément la réaction pour greffer le polymère de lactone à l'amidon et la réaction pour former le polyester indépendant, et ensuite l'addition d'un agent d'estérification, afin de bloquer simultanément tout ou partie des groupes hydroxyle terminaux de la chaîne de greffage polyester, des groupes hydroxyle terminaux du polymère moléculaire miscible et des groupes hydroxyle reliés directement à l'amidon.

**18.** Procédé selon la revendication 17, dans lequel le monomère qui subit la réaction de polymérisation est au moins une espèce de lactone de 4 à 12 chaînons sous forme d'un monomère ou d'un oligomère.

**19.** Procédé selon la revendication 17, dans lequel la réaction de polymérisation est réalisée sous une pression réduite inférieure à 200 mm de Hg et à une température inférieure à 200°C.

**20.** Procédé selon la revendication 17, dans lequel l'agent d'estérification est un ester vinylique, un anhydride d'acide carboxylique ou un halogénure d'acide carboxylique, dont le résidu de réaction avec un ester comporte 2 à 18 atomes de carbone.

**21.** Procédé selon la revendication 17, dans lequel le catalyseur d'estérification/greffage est un ou plusieurs des éléments quelconques parmi l'hydroxyde, le sel d'acide minéral, le carbonate et l'alkylate d'un métal appartenant aux métaux alcalins, aux métaux alcalino-terreux et aux métaux amphotères.

**22.** Procédé de synthèse de l'alliage amidon estérifié greffé à un polyester-polymère selon la revendication 17, dans lequel le catalyseur pour la réaction de polymérisation du polyester indépendant est (1) un ou plusieurs des éléments quelconques parmi l'hydroxyde, le sel d'acide minéral, le carbonate et l'alkylate d'un métal appartenant aux métaux alcalins, aux métaux alcalino-terreux et aux métaux amphotères et (2) un composé qui porte un groupe amine dans son bloc de construction.

**23.** Composition de résine thermoplastique biodégradable qui comprend un polymère de base et un adjuvant facultatif, ledit polymère de base étant composé entièrement ou en partie de l'alliage amidon estérifié greffé à un polyester-polymère selon la revendication 14.

**24.** Composition de résine thermoplastique biodégradable selon la revendication 23, dans laquelle l'adjuvant est un plastifiant biodégradable dont la quantité est de 1 à 90 parties en poids pour 100 parties en poids du polymère de base.

**25.** Composition de résine thermoplastique biodégradable selon la revendication 24, qui contient en tant qu'adjuvant supplémentaire un agent dispersant en une quantité de 0,001 à 100 parties en poids pour 100 parties en poids du polymère de base.

**26.** Composition de résine thermoplastique biodégradable selon la revendication 23, qui contient en tant qu'adjuvant une charge organique/minérale en une quantité de 1 à 70 parties en poids, pour 100 parties en poids du polymère de base.

**27.** Composition de résine thermoplastique biodégradable selon la revendication 26, qui contient en tant qu'adjuvant supplémentaire un agent dispersant en une quantité de 0,001 à 100 parties en poids pour 100 parties en poids du polymère de base.

**28.** Composition de résine thermoplastique biodégradable selon la revendication 23, qui contient en tant qu'adjuvant un agent dispersant en une quantité de 0,001 à 100 parties en poids pour 100 parties en poids du polymère de base.

**29.** Composition de résine thermoplastique biodégradable selon la revendication 23, qui contient pour 100 parties en poids du polymère de base, 1 à 90 parties en poids d'un plastifiant biodégradable, et de 1 à 70 parties en poids d'une charge organique/minérale.

**30.** Composition de résine thermoplastique biodégradable selon la revendication 29, qui contient en tant qu'adjuvant supplémentaire un agent dispersant en une quantité de 0,001 à 100 parties en poids pour 100 parties en poids du polymère de base.

**31.** Composition de résine thermoplastique biodégradable selon la revendication 23, dans laquelle le polymère à incorporer dans l'alliage amidon estérifié greffé à un polyester-polymère est un ou plusieurs éléments choisis dans le groupe constitué par les dérivés d'amidon estérifiés et/ou éthérifiés, les polymères d'oléfines, les polymères vinyliques, les polyesters, les polyamides, les polymères d'alkylate et les dérivés de cellulose.

**32.** Composition de résine thermoplastique biodégradable selon la revendication 24, dans laquelle le plastifiant biodégradable est un ou plusieurs éléments choisis dans le groupe constitué par les esters phtalate, les esters carboxylate aromatiques, les esters de diacides aliphatiques, les dérivés d'esters d'acides aliphatiques, les esters phosphate, les plastifiants à base de polyester, les plastifiants à base d'un époxy, et les plastifiants polymères.

**33.** Composition de résine thermoplastique biodégradable selon la revendication 26, dans laquelle la charge est un ou plusieurs éléments choisis dans le groupe constitué par les charges minérales naturelles, les charges organiques naturelles, et les charges synthétiques.

**34.** Composition de résine thermoplastique biodégradable selon la revendication 28, dans laquelle l'agent dispersant est un ou plusieurs éléments choisis dans le groupe constitué par un sel de métal d'un acide gras, un tensioactif anionique, les tensioactifs non ioniques, les polymères synthétiques cationiques ou anioniques solubles dans l'eau, les phosphates condensés, les dérivés d'amidon cationiques, les dérivés de cellulose, les gommes végétales et les dérivés de celles-ci, les polymères d'animaux, les polymères microbiens et les émulsions de polymères synthétiques

Fig. 1

Example 1-1

High-amylose corn starch 100g

← Sodium bicarbonate 30g

← DMSO 104g

Heating and mixing (at 45°C) 30-10 min

Sodium-starch complex

← ε-caprolactone 422.2g

Heating to 80°C (stirring and mixing)
Reaction time (3 hours)

← Vinyl acetate monomer 192.2g

Reaction time, 2 hours (stirring)

Recovering under water

Dewatering, washing, drying.

Fig. 2

Example 1-2

Corn starch 100g

← DMSO 800g

Gelatinizing at 80°C for 20 minutes

← Sodium carbonate 30g

← ε-caprolactone 668.5g

↑ Vinyl propionate monomer 220.8g

Reaction at 80°C for 5 hours

Recovering under water

Dewatering, washing, drying.

Fig. 3

Example 1-3

| | |
|---|---|
| Oxidized starch | 100g |
| ← Sodium bicarbonate | 30g |
| ← DMSO | 104g |
| Heating and mixing (at 45°C) | |
| Sodium-starch complex | |
| ← ε-caprolactone | 211.5g |
| Reaction at 80°C for 4 hours | |
| ← Vinyl acetate monomer | 191.8g |
| Reaction at 80°C for 4 hours | |
| Recovering under water | |
| Dewatering, washing, drying. | |

Fig. 4

Example 1-4

Highly-acetylated high-amylose corn starch(DS = 2.8) 100g

← Sodium carbonate 30g

← Water 2.9g

← DMSO 104g

Heating and mixing

Sodium-starch complex

← ε-caprolactone 407.2g

Heating to 80°C (stirring and mixing)
Reaction time: 3 hours

← Vinyl acetate monomer 30.8g

Reaction time: 2 hours

Recovering under water

Dewatering, washing, drying.

Fig. 5

Comparative Example 1
(Highly acetylated starch)

Acid-treated high-amylose corn starch 100g

← DMSO 800g

← Gelatinizing

← Sodium bicarbonate 30g

← Dimethylaminopyridine 5.4g

← Acetic anhydride 302.2g

Reaction at 65°C for 4 hours

Degree of ester substitution 2.45

Dewatering, washing, and drying.

Fig. 6

Comparative Example 2
(Highly acetylated starch)

corn starch 100g

↓

← N,N-dimethylacetamide 1299g

← Anhydrous lithium chloride 117.3g

Stirring and mixing at 165°C for 30 minutes

↓

← ε-caprolactone 635.8g

← Triethylamine 61.5g

Reaction at 85°C for 18 hours

↓

Cooling and dissolving in methanol

↓

Precipitation in cold water, washing, and recovery.
The reaction product was a very soft rubbery substance, which presented difficulties in recovery and washing.

Fig. 7

Example 2-1

High-amylose corn starch — 100 parts

← Sodium bicarbonate — 20 parts

← DMSO — 800 parts

↓

Heating and dissolution
(at 80°C for 30 minutes)

↓

Sodium-starch complex

← Addition of ε-caprolactone — 120 parts
with stirring at 80°C
under reduced pressure (30 mmHg)

↓

Reaction for 1 hour
(at 80°C and 30 mmHg)

← Addition of sodium methylate — 0.6 parts

↓

Reaction for 2 hour
(at 80°C and 30 mmHg)

← Addition of vinyl acetate — 160 parts
after depressurizing

↓

Reaction for 2 hours
(at 80°C and atmospheric pressure)

↓

Recovery under water, followed by dehydration,
washing, and drying.

Fig. 8

Example 2-2

High-amylose corn starch 100 parts

← Sodium bicarbonate 20 parts

← DMSO 800 parts

↓

Heating and dissolution
(at 80°C for 30 minutes)

↓

Sodium-starch complex

← Addition of L-lactide 200 parts
with stirring at 80°C
under reduced pressure (10 mmHg)

↓

Reaction for 1 hour
(at 80°C and 10 mmHg)

← Addition of aluminum-ethylate 0.6 parts

↓

Reaction for 2 hour
(at 80°C and 10 mmHg)

← Addition of vinyl acetate 160 parts
after depressurizing

↓

Reaction for 2 hours
(at 80°C and atmospheric pressure)

↓

Recovery under water, followed by dehydration,
washing, and drying.

Fig. 9

Example 2-3

High-amylose corn starch 100 parts

↓

← Sodium bicarbonate 20 parts

← DMSO 800 parts

↓

Heating and dissolution
(at 80°C for 30 minutes)

↓

Sodium-starch complex

← Addition of DL-lactide 80 parts
and ε-caprolactone 120 parts
with stirring at 80°C
under reduced pressure (10 mmHg)

↓

Reaction for 1 hour
(at 80°C and 10 mmHg)

← Addition of aluminum-ethylate 0.6 parts

↓

Reaction for 2 hour
(at 80°C and 10 mmHg)

← Addition of vinyl acetate 160 parts
after depressurizing

↓

Reaction for 2 hours
(at 80°C and atmospheric pressure)

↓

Recovery under water, followed by dehydration,
washing, and drying.